# EUROPEAN PATENT SPECIFICATION

(11) **EP 4 062 807 B1**
(45) Date of publication and mention of the grant of the patent: **10.09.2025**
(21) Application number: 21812002.0
(22) Date of filing: 06.04.2021
(51) Int. Cl.: A47J 27/00, A47J 36/00, A47J 43/046, A47J 43/07, A47J 43/08

(54) **STIRRING-TYPE COOKING APPLIANCE**
RÜHRKOCHGERÄT
APPAREIL DE CUISSON À AGITATION

(30) Priority: 29.05.2020 CN 202010473548; 29.05.2020 CN 202020947139 U; 29.05.2020 CN 202020947109 U; 29.05.2020 CN 202020947023 U; 29.05.2020 CN 202020947132 U; 19.11.2020 CN 202022687250 U
(43) Date of publication of application: 28.09.2022
(73) Proprietor: Chunmi Technology (shanghai) Co., Ltd., Shanghai 201203 (CN)
(72) Inventor: YANG, Hua, Shanghai 201203 (CN); CHEN, Huashan, Shanghai 201203 (CN); ZHANG, Tao, Shanghai 201203 (CN); ZHENG, Xiuqian, Shanghai 201203 (CN); YANG, Youru, Shanghai 201203 (CN)
(74) Representative: Michalski Hüttermann & Partner Patentanwälte mbB
(86) International application number: PCT/CN2021/085581
(87) International publication number: WO 2021/238412

(56) References cited:
- EP-A1- 1 731 068
- CN-A- 105 167 568
- CN-A- 108 567 304
- CN-A- 110 025 232
- CN-A- 110 313 854
- CN-A- 110 859 499
- CN-A- 110 859 499
- CN-A- 111 067 381
- CN-A- 111 603 031
- CN-U- 207 168 422
- CN-U- 208 551 478
- CN-U- 210 383 686
- CN-U- 210 541 052
- CN-U- 212 591 760

## Description

### TECHNICAL FIELD

The present disclosure relates to the field of kitchen electrical appliance technology, and to a stirring-type cooking appliance.

### BACKGROUND

A stir-frying machine is a new generation of microcomputer-controlled intelligent cooking apparatus. The apparatus is generally convenient, simple to operate, and produces no oil fume. The stir-frying machine not only can achieve automatic feeding, seasoning, stir-frying, temperature control, cleaning, discharging, but also has functions of stirring, frying, cooking, deep-frying, blasting, braising, steaming, boiling, brazing, stewing, and casseroling in one pot, making it easy to automate and make the cooking process more interesting. CN 110859499A relates to a kitchen appliance containing a cover closing safety protection linkage assembly and a control method of the kitchen appliance, and CN 110313854A discloses a food processor and relates to the technical field of household appliances. However, the existing stir-frying machine products often have the following defects.

When stirring at a high speed, the container cup shakes to a large extent. Some without secured locks, the container cups tend to be separated from the main bodies. Some have one or two secured locks, which cannot be balanced and fixed and make the container cups shake and vibrate severely when working.

The cover opening protection structure is complex and unstable. Some use photoelectric cover opening protection, but the photoelectric cover opening protection has potential danger of instability in the case of poor light. There are also electrical locks for locking covers of cups, such as electrical current detection micro switches, which has a high cost.

During high-speed stirring, the blade holder in the container cup will vibrate greatly, and the blade assembly will be displaced due to the vibration. There is a danger of the blade holder coming out, or when the screw is not in place, the blade holder coming out is more likely to occur.

The motor and the blade assembly in the container cup have problems such as eccentricity, causing a general problem of large noise and vibration, or the positioning rib is damaged after falling, causing the motor and the blade assembly to have problems such as non-concentricity, and higher noise and vibration.

If the user accidentally pours water from the cup into the mainframe or the user forgets to install the blade holder into the cup and then pour the water, it tends to cause the mainframe to be soaked in water for a large area.

The large vibration and torque generated when the food is eccentrically moved in the container cup will cause vibration and displacement of the foot pads. The continuous movement of the whole machine may cause the machine to move out of the table and fall on the ground, causing serious accidents.

Therefore, in view of these problems, it would have important practical significance to provide a safe, stable, and highly controllable stirring-type cooking appliance which can ensure accuracy of weighing and prevent the whole machine from overflowing by jointly utilizing the container cup fixing structure, the opening protection structure, the blade assembly fixing structure, and the weighing foot assembly.

### SUMMARY

In order to solve the above-mentioned problems in the prior art, the present invention provides a stirring-type cooking appliance according to claim 1, which can ensure the accuracy of weighing, preventing the whole machine from overflowing and which is safe, stable, and has high controllability.

The technical solution adopted by the present disclosure to solve this problem is as follows.

A stirring-type cooking appliance as defined in claim 1, including a mainframe housing, a motor assembled in the mainframe housing, and a container cup assembly detachably assembled on the mainframe housing, the mainframe housing including an integrally installed mainframe upper cover and a mainframe base, each corner end of the mainframe base being respectively provided with an installation position,
wherein the container cup assembly is locked/unlocked with the mainframe housing through a container cup fixing structure, the container cup assembly and the motor are interlocked with each other through a cover opening protection structure, a blade assembly in the container cup assembly and the motor are interlocked with each other through a blade assembly fixing structure, and a weighing foot assembly is suspended and installed at the installation position.

Preferably, the container cup assembly includes a handle base and a handle cover which are connected as one body, a blade assembly assembled inside the container cup, a container cover buckled on the container cup, and a handle shell fixed on one side of the container cup. The handle shell includes a handle base and a handle cover assembled on the handle base. The handle base is cut with a hollow working slot therein along its length direction. At least two cover locking screw buckles are distributed on the container cover with an interval, and the cover locking screw buckles open toward the rotation direction of the container cover. On the outer side of the rim of the container cup, cover locking protrusions are protruding and formed, which can respectively be screwed into the cover locking screw buckles one to one.

The mainframe upper cover includes an upper cover side wall in a cylindrical surface form, an upper cover bottom wall closing at the lower part of the upper cover side wall, and a circle of upper cover outer edge formed on the upper edge of the upper cover side wall and extending outwards. One side of the upper cover side wall and the upper cover outer edge is provided with an avoidance slot for avoiding the lower end of the handle shell. A container cup installation space is formed above the upper cover bottom wall, and an electrical appliance installation space is formed below the upper cover bottom wall.

The container cup fixing structure includes:
locking buckle members, wherein a number of the locking buckle members is at least three, and the locking buckle members are evenly distributed on a periphery of the upper cover side wall, the locking buckle member includes a locking buckle bracket and a locking buckle that can be extended/retracted on the locking buckle bracket;
locking buckle openings, wherein the locking buckle opening are of the same number as the number of the locking buckle members, and the locking buckle openings are evenly provided on the upper cover side wall and correspond to the locking buckles one to one, for the locking buckles to extend/retract;
a rotating ring, wherein the rotating ring is rotatably assembled on the periphery of the upper cover side wall, and is provided with a release lever for turning the rotating ring to rotate, and rotating ring bosses for driving the locking buckles to retract;
fixing holes, wherein the fixing holes are of the same number as the number of the locking buckle members, and the fixing holes are evenly provided on a side wall of the cup holder and for the locking buckles to be inserted in the fixing holes one to one; and
tension springs, wherein the tension spring has one end fixed on the rotating ring and the other end fixed on the upper cover outer edge.

Further preferably, the locking buckle bracket is fixed on the upper cover outer edge on the periphery of the upper cover side wall, and a sliding hole for sliding fit with the locking buckle is opened therethrough on the locking buckle bracket.

Preferably, the locking buckle includes:
a locking buckle sliding portion, wherein the locking buckle sliding portion is perpendicular to the locking buckle bracket and can slide freely on the locking buckle bracket, the line of the axis of the locking buckle sliding portion is parallel to the radial direction of the upper cover side wall;
a locking buckle head, wherein the locking buckle head is installed at one end of the locking buckle sliding portion proximate to the upper cover side wall, and has a right-angle trapezoidal block structure;
a locking buckle boss, wherein the locking buckle boss is installed on the locking sliding part, and is a right-angle trapezoidal block structure; and
a first return spring, wherein the first return spring is sleeved on the locking buckle sliding portion between the locking buckle bracket and the locking buckle head.

Further preferably, the rotating ring has a ring structure, and the upper part of the rotating ring is connected with the release lever movably inserted in an arc-shaped through slot of the upper cover outer edge, and the lower part of the rotating ring is connected with the rotating ring bosses. The number of the rotating ring bosses is the same as the number of the locking buckle members. The rotating ring boss is a right-angled trapezoidal block structure, and the inclined surface of the rotating ring boss is opposite to the inclined surface of the locking buckle boss. The rotating ring is provided with at least three arc-shaped sliding slots at equal intervals along the circumferential direction of the rotating ring. The arc-shaped sliding slot is engaged with a ring-shaped guiding wheel. The ring-shaped guiding wheel is slidably connected to the arc-shaped sliding slot and the ring-shaped guiding wheel is fixedly connected to the upper cover outer edge.

Preferably, the cover opening protection structure includes:
a handle safety link, wherein the handle safety link can move up and down in a hollow working slot of a handle base, and includes a link body, a driving inclined surface and a driving rod respectively provided on an upper part and a lower part of the link body;
a second return spring, wherein the second return spring is sleeved on the driving rod and located between the link body and the handle base;
a hook-type buckle, wherein the hook-type buckle is fixedly connected to a lower end of the container cover, and has a buckle inclined surface formed at a lower part of the hook-type buckle for driving the handle safety link to move up and down; and
a micro switch, wherein the micro switch is assembled in the mainframe housing, and the driving rod drives an elastic leaf of the micro switch to be pressed down/bounced up through a mainframe safety link.

Further preferably, the hook-type buckle includes a support portion and a trigger portion which are connected as one body, and the buckle inclined surface is formed at the lower portion of the trigger portion. A positioning slot is recessed on one side of the buckle inclined surface, and one side of the driving inclined surface is raised with a positioning rib that matches with the positioning slot.

Further preferably, the upper part of the handle base is provided with an opening for the trigger portion to be inserted in, and the lower part of the handle base is provided with a first via hole for the driving rod to extend out of there freely. The link body is provided with at least two sliding slots along its length direction, and a link guiding wheel is engaged in the sliding slot. The link guiding wheel is slidably connected with the sliding slot, and the link guiding wheel is fixedly connected to the container cup / the handle base.

Further preferably, a micro switch bracket is also installed in the mainframe housing, and the mainframe safety link and the micro switch are respectively disposed in the micro switch bracket.

Preferably, the mainframe safety link includes:
a safety link body, wherein the safety link body has a side facing the micro switch which forms a trigger inclined surface for triggering on/off of the micro switch, and the upper and lower parts of the mainframe safety link are vertically connected to an upper trigger rod and a lower trigger rod respectively; the avoidance slot is provided with an avoiding hollow cylinder for the upper trigger rod to penetrate upwards, and the upper trigger rod penetrates the avoiding hollow cylinder upwards to abut against the driving rod;
a water receiving trough, wherein the water receiving trough is formed as a recess on the upper part of the safety link body, and the bottom of the water receiving trough is semi-closed, and disposed under the avoiding hollow cylinder; and
a drainage hole, wherein the drainage hole is disposed at the lower part of the safety link body, communicates with the water receiving trough through an overflow channel

Further preferably, the drainage hole is provided at least one pair of them, which are disposed on two opposite sides of the lower part of the overflow channel. The lower opening end of the water receiving trough correspond to the overflow channel and the drainage holes up and down.

Further preferably, the upper part of the micro switch bracket is provided with a slot for inserting the safety link body, and the lower part thereof is provided with a via hole for the lower trigger rod to extend out of there freely. A third return spring is sleeved on the lower trigger rod between the safety link body and the micro switch bracket.

Preferably, the blade assembly fixing structure includes:
a blade assembly, wherein the blade assembly includes a blade holder assembled on a bottom wall of the container cup and at least two groups of blade sets arranged staggered with each other up and down;
a blade assembly fixing lock, wherein the blade assembly fixing lock is movably sleeved on an outer side of the blade holder and locked with the blade holder through a screw buckle assembly, and at least two spanner bars are evenly formed on an outer wall along a circumferential direction.

Further preferably, a sealing ring is installed between the blade holder and the bottom wall of the container cup;
a wave-shaped washer and a pressing block are sleeved on the blade holder between the bottom wall of the container cup and the blade assembly fixing lock.

Further preferably, the blade holder includes a blade holder post, a blade holder table with a circular table structure formed on the blade holder post, wherein the blade holder post penetrates and is fixed on the bottom wall of the container cup, the sealing ring is located between the blade holder table and the bottom wall of the container cup, and a plurality of sealing concentric rings are protruded and distributed respectively on upper and lower surfaces of the sealing ring.

Further preferably, the blade assembly fixing structure further includes a clutch assembly;
the clutch assembly includes an upper clutch and a lower clutch, and the upper clutch can be matched with and inserted on the lower clutch.

Further preferably, the upper clutch is coaxially arranged under the blade holder, and is a star-shaped cylindrical structure with even-numbered sides;
the lower clutch is coaxially arranged above the motor, and its upper surface is recessed from the middle part to form a star-shaped cylindrical slot for the upper clutch to be matched and inserted therein.

Further preferably, the upper clutch and the star-shaped cylindrical slot are respectively a hexagram cylindrical structure with six circular arcs/tooth-shaped protrusions distributed along the circumferential direction, and the edges of the upper clutch or the star-shaped cylindrical slot have arc-shaped transitions.

Further preferably, the blade holder includes a blade holder post and a blade holder table with a circular table structure formed on the blade holder post. The blade holder post penetrates and is thus fixed on the bottom wall of the container cup. A sealing ring is installed between the blade holder and the bottom wall of the container cup. A plurality of sealing concentric rings are protruded and distributed on the upper and lower surfaces of the sealing ring respectively.

Further preferably, a middle part of the cup holder is provided with a cup holder hole for the blade holder and the blade assembly fixing lock to pass through, a pair of limit ribs for restricting forward rotation of the spanner bars are also provided on a periphery of the cup holder hole, and at least two fool-proof anti-dropping ribs for restricting reverse rotation of the spanner bars are evenly fixed in a circumferential direction on a top wall of the upper cover bottom wall.

Further preferably, the fool-proof anti-dropping rib is an arc-shaped rib structure extending in the circumferential direction of the mainframe upper cover, and when the container cup assembly is properly assembled on the mainframe cover, the spanner bar bodies in the spanner bars are located between the fool-proof anti-dropping ribs and the limit ribs.

Further preferably, the blade assembly fixing lock includes an upper lock sleeve and a lower lock sleeve that can be movably sleeved on an outer side of the blade holder and the lower clutch, respectively, and the upper lock sleeve and the lower lock sleeve are coaxially arranged up and down and connected as one body.

Further preferably, the diameter of the upper lock sleeve is smaller than the diameter of the lower lock sleeve.

Further preferably, the screw buckle assembly includes a fixing lock screw buckle and a to-be-locked member, and the fixing lock screw buckle is used to lock the to-be-locked member.

Further preferably, there are at least two fixing lock screw buckles formed on an inner wall of the blade assembly fixing lock and evenly formed on along a circumference direction of the inner wall of the blade assembly fixing lock, a locking surface of the fixing lock screw buckle is L-shaped, and the locking surface has:
a guiding inclined surface, which is an inclined surface inclined to one side;
a locking flat surface, which is transitionally connected with the guiding inclined surface and extends a certain length along the circumference of the blade assembly fixing lock; and
a blocking inclined surface, which is a vertical surface inclined to one side, is transitionally connected to the locking flat surface.

Further preferably, the blade assembly fixing lock includes:
a wear-resistant insert structure integrally formed in the blade assembly fixing lock, and includes a wear-resistant insert body embedded in the blade assembly fixing lock and a wear-resistant ear used to protect the fixing lock screw buckle on the blade assembly fixing lock, the wear-resistant ear matches a shape of the locking surface of the fixing lock screw buckle.

Further preferably, the wear-resistant insert body is a closed annular sheet structure, and at least two positioning notches are formed in the outer edge of the wear-resistant insert body.

Further preferably, the wear-resistant ears are integrally formed on the inner edge of the wear-resistant insert body, and the number of the wear-resistant ears is the same as the number of the fixing lock screw buckles and are arranged in a one-to-one correspondence with the fixing lock screw buckles. The wear-resistant ear includes a flat wear-resistant portion and a curved guiding portion, and the flat wear-resistant portion and the curved guiding portion are respectively embedded in the locking flat surface and the guiding inclined surface.

Further preferably, the inner edge of the wear-resistant insert body is also integrally formed inward with at least two anti-shake protrusions, and the anti-shake protrusions and the wear-resistant ears are arranged alternately.

Further preferably, the wear-resistant insert body is embedded in the upper lock sleeve. When the blade assembly fixing lock and the blade holder post are locked with each other, the wear-resistant ears are located between the fixing lock screw buckles and lumps.

Further preferably, the to-be-locked members are the lumps evenly distributed along the outer wall of the blade holder post. The number of the lumps is equal to the number of the fixing lock screw buckles, and can be screwed into the fixing lock screw buckles one-to-one by rotating.

Further preferably, the fixing lock screw buckles are evenly formed along the circumferential direction of the inner wall of the upper lock sleeve in the blade assembly fixing lock.

Further preferably, the spanner bar includes a spanner bar body extending outward in a radial direction of the blade assembly fixing lock, and a wrench slot opened at a lower end of the spanner bar body.

Further preferably, the lower surface of the spanner bar body is flush with the lower surface of the blade assembly fixing lock.

Further preferably, the screw buckle assembly includes at least two lumps evenly distributed along the outer wall of the blade holder post in the circumferential direction, and fixing lock screw buckles which evenly formed along the inner wall of the upper lock sleeve and into which the lumps can be screwed one to one.

Further preferably, the wave-shaped washer is a soft rubber washer with a certain elasticity, on which wave crests and wave troughs are alternately arranged, and the pressing block is a PPS ring-shaped structure to limit the shaking of the wave-shaped washer along the circumferential direction.

Further preferably, the blade assembly fixing structure further includes:
a shock-proof pad including a hollow washer that is matched and clamped between the upper clutch and a star-shaped cylindrical slot.

Further preferably, the shock-proof pad is a silica gel shock-proof pad.

Further preferably, the hollow washer is a hexagram cylindrical structure with six arc protrusions distributed along the circumferential direction, and the upper edge of the hollow washer extends outward to form a ring of washer outer edge, the upper surface of the lower clutch is recessed downward to form an outer edge slot into which the washer outer edge is inserted.

Further preferably, the mainframe upper cover is formed by recessing the upper surface of the mainframe housing for the container cup assembly to be assembled.

Preferably, at least three shock-proof structures are evenly distributed on the outer circumference of the top wall of the upper cover bottom wall, and the shock-proof structure includes:
a shock-proof pad structure including an arch-shaped shock-proof pad body and a shock-proof pad support rod which are formed integrally, wherein the shock-proof pad support rod is provided with a limit step;
a shock-proof seat structure integrally formed on the inner surface of the mainframe upper cover, and including a shock-proof seat body for receiving the arch-shaped shock-proof pad body and a limit hole for inserting the shock-proof pad support rod.

Further preferably, the upper middle part of the arch-shaped shock-proof pad body protrudes upward to form an elastic protrusion, and the lower middle part of the arch-shaped shock-proof pad body recesses upward to form a recessed space. The surface of the arch-shaped shock-proof pad body is in an arc transition shape.

Preferably, the motor is fixed in the mainframe housing through a motor fixing structure, and the motor fixing structure includes an upper shock-proof structure and a lower shock-proof structure respectively installed on upper and lower parts of the motor to prevent longitudinal displacement and vibration of the motor, and peripheral shock-proof structures evenly distributed on a periphery of the motor to prevent lateral displacement and vibration of the motor.

Further preferably, the upper shock-proof structure is disposed between the upper cover bottom wall and the motor, and is a shock-proof rubber sleeve, which includes a shock-proof surface of a cylindrical structure, and a shock-proof ring formed on the upper end of the shock-proof surface and extending inward.

Further preferably, the lower shock-proof structure is a shock-proof washer, and a peripheral rib for supporting and positioning the lower shock-proof structure is formed on the mainframe base. At least four to eight vertically arranged sleeve columns are arranged on the periphery of the peripheral rib at equal intervals.

Further preferably, the peripheral shock-proof structures include shock-proof sleeves sleeved on the sleeve columns in one-to-one correspondence, and the outer walls of the shock-proof sleeves are protruded with protruding strips that closely fit with the motor.

Preferably, an overflow structure is further provided in the mainframe upper cover, and the overflow structure includes:
a mainframe-upper-cover drainage structure including at least one side drainage hole opened at an edge of the upper cover bottom wall, and a first water receiving part for transferring liquid in the side drainage hole;
an interference drainage structure including a water receiving tray for receiving liquid overflowing from a gap between the lower clutch and the upper cover bottom wall, and a second water receiving component for transferring liquid in the water receiving tray.

Further preferably, wherein the upper cover bottom wall is provided with a motor hole for partially inserting the lower clutch, and at least one circle of water retaining ring is formed downwardly on an outer side of the lower clutch, a circle of water retaining wall extends upward from an edge of the motor hole, and an upper end of the water retaining wall extends into the water retaining ring.

Further preferably, the first water receiving part includes a base drainage pipe vertically installed on the mainframe base, and a water receiving pipe inserted on an upper end of the base drainage pipe. The lower end of the side drainage hole is tightly connected with the open end of the water receiving pipe through a transfer structure.

Further preferably, the water receiving tray is located between the upper cover base and the motor. The water receiving tray includes a receiving tray surface, an outer tray wall extending upward along an edge of the receiving tray surface, and one side of the outer tray wall is formed with a water receiving notch. A water guiding lip extends downward from the edge of the receiving tray surface below the water receiving notch.

Further preferably, the second water receiving part includes a base drainage pipe a vertically installed on the mainframe base, and a drainage gap, wherein the drainage gap is in the shape of a circular column and located between the weighing foot assembly and a via hole for a suction disc foot.

Preferably, the weighing foot assembly includes a cantilever beam assembly, an upper steel plate and a weighing sensor bracket respectively arranged on and below the cantilever beam assembly, and a suction disc foot bracket inserted below the weighing sensor bracket;
the stirring-type cooking appliance further includes a shock-proof and displacement-proof structure of the weighing foot;
the shock-proof and displacement-proof structure of the weighing foot includes: a reset ring provided between the weighing sensor bracket and the suction disc foot bracket and for reducing lateral vibration and displacement on the circumference, and a suction disc foot provided at a lower end of the suction disc foot bracket and for reducing longitudinal vibration and lateral displacement.

Further preferably, the installation position includes a via hole for the suction disc foot which penetrates the mainframe base and through which the suction disc foot bracket is suspended and inserted, and screw posts respectively fixed to the periphery of the via hole for the suction disc foot, and the upper steel plate and the screw posts are connected by a self-tapping screw 63.

Further preferably, a movement gap between the suction disc foot bracket and the via hole for the suction disc foot has a size larger than that of a movement gap between the second hollow positioning post of the suction disc foot bracket and the first hollow positioning post of the weighing sensor bracket.

Further preferably, the cantilever beam assembly includes a cantilever beam, an outlet end extending outward from one side of the cantilever beam, and patches protruding and disposed respectively on the upper and lower ends of the cantilever beam.

Further preferably, the weighing sensor bracket has a cylindrical structure. The upper part of the weighing sensor bracket is recessed with a weighing avoidance slot for avoiding the lower end of the position of the patch of the cantilever beam assembly, and one side of the upper part also extends outwardly with a fitting slot that matches one end of the cantilever beam assembly. A first hollow positioning post is formed protruding downward from the lower part of the weighing sensor bracket.

Further preferably, the reset ring has a ring-shaped cylindrical structure, the reset ring is sleeved on the outside of the first hollow positioning post, and the reset ring is provided with a plurality of shock-absorbing holes penetrating the reset ring and uniformly arranged in a circular array, and the shock-absorbing holes are arranged obliquely toward the circumferential direction of the reset ring.

Further preferably, the suction disc foot has a stepped shape, including a rubber foot part and a suction disc part that are connected from top to bottom in this order. The suction disc part is recessed to form a truncated cone-shaped suction slot.

Further preferably, the suction disc foot bracket has a cylindrical structure, and a second hollow positioning post that can be inserted into the first hollow positioning post is formed protruding upward from the upper part of the suction disc foot bracket. A positioning ring wrapped around the outside of the reset ring is formed upward on the upper edge of the second hollow positioning post, and a positioning slot for the suction disc foot to be fitted and inserted is formed as a recess in the lower part of the second hollow positioning post.

Further preferably, the weighing foot assembly further includes a positioning screw, and the positioning screw passes through the suction disc foot, the suction disc foot bracket, the second hollow positioning post and the first hollow positioning post sequentially from bottom to top and is connected to an anti-dropping nut in the weighing avoidance slot.

Further preferably, there are also stainless steel washers provided respectively between the anti-drop nut and the weighing sensor bracket, between the reset ring and the suction disc foot bracket, and between the positioning screw and the suction disc foot.

A wear-resistant insert structure, wherein the wear-resistant insert structure is integrally formed in a blade assembly fixing lock, and includes a wear-resistant insert body embedded in the blade assembly fixing lock and a wear-resistant ear used to protect the fixing lock screw buckle on the blade assembly fixing lock, and the wear-resistant ear matches the shape of the locking surface of the fixing lock screw buckle

A shock-proof and displacement-proof structure for a weighing foot, which is arranged in a weighing foot assembly, wherein weighing foot assembly includes a cantilever beam assembly, an upper steel plate and a weighing sensor bracket respectively arranged on and below the cantilever beam assembly, a suction disc foot bracket inserted below the weighing sensor bracket, the shock-proof and displacement-proof structure includes: a reset ring provided between the weighing sensor bracket and the suction disc foot bracket and for reducing lateral vibration and displacement on the circumference, and a suction disc foot provided at a lower end of the suction disc foot bracket and for reducing longitudinal vibration and lateral displacement.

A fixing structure of the blade assembly, including:
a blade assembly, wherein the blade assembly includes a blade holder assembled on a bottom wall of the container cup and at least two groups of blade sets arranged staggered with each other up and down;
a blade assembly fixing lock, wherein the blade assembly fixing lock is movably sleeved on an outer side of the blade holder and locked with the blade holder through a screw buckle assembly, and at least two spanner bars are evenly formed on an outer wall along a circumferential direction.

The advantages and positive effects of the present disclosure lie in that:
1. In the present disclosure, the container cup assembly is interlocked/ unlocked from the mainframe housing through the container cup fixing structure, the operation is easy, without concerning the problem of the container cup assembly coming out or shaking, which can greatly improve the user experience.
2. In the present disclosure, the container cup assembly and the motor are interlocked with each other through the cover opening protection structure, so that the motor can be controlled to start or stop. The structure is simple, reliable, practical, safe, stable, controllable, and low in cost. This can meet the safety requirements and greatly reduce the probability of mechanical hazards.
3. In the present disclosure, the blade assembly in the container cup assembly and the motor are interlocked with each other through the blade assembly fixing structure, the noise and vibration of the whole machine can be greatly reduced during high-speed stirring, providing a better user experience.
4. In the present disclosure, the weighing foot assembly is suspended and installed at the installation position, on the one hand, even if the mainframe is fully loaded with food on a slanted place of the tabletop, the weighing foot assembly won't touch a via hole for a suction disc foot, which can ensure the accuracy of weighing; on the other hand, it can provide multiple drainage gaps for the mainframe to prevent overflow for the whole machine.
5. The present disclosure gives the handle shell new functionality in that the handle shell can be used as an ordinary handle, practical, simple, aesthetic, and low in cost, and can also be used as an interlocked structure between the container cover and the motor. The handle is multi-functional, and is suitable for market promotion.
6. In the present disclosure, a pair of limit ribs for restricting the forward rotation of the spanner bars are also provided on the periphery of the cup holder hole, fool-proof anti-dropping ribs for restricting reverse rotation of the spanner bars are provided on the top wall of the upper cover bottom wall, which can further restrict the forward/reverse rotation of the blade assembly fixing lock and the blade holder, and have a bidirectional anti-dropping effect.
7. In the present disclosure, the fool-proof anti-dropping ribs are formed on the mainframe upper cover , on the one hand, it has the function of preventing falling off, and on the other hand, it has the function of preventing foolishness. The structure is simple, reliable, practical, safe, stable, and highly controllable, which can greatly reduce the chance of mechanical hazards.
8. In the present disclosure, the upper shock-proof structure, the lower shock-proof structure, and the peripheral shock-proof structures are fit together in an assembly, which can not only have a central positioning function for the motor and reduces noise, but also can prevent the motor from horizontal and vertical displacement and vibration.
9. In the present disclosure, the overflow structure includes a mainframe-upper-cover drainage structure and an interference drainage structure. The two drainage means can both function to effectively prevent the mainframe from flooding in a large area.
10. In the present disclosure, a reset ring is installed between the weighing sensor bracket and the suction disc foot bracket, the reset ring can absorb the lateral vibration and remove a part of the lateral torsion, which can reduce the lateral vibration and displacement, and prepare for the next extrusion deformation.
11. In the present disclosure, the shock-proof and displacement-proof structure of the weighing foot includes a reset ring for reducing lateral vibration and displacement on the circumference between the weighing sensor bracket and the suction disc foot bracket. When the reset ring is pressed and deformed by the weighing sensor bracket, the reset ring can absorb the lateral vibration and remove a part of the lateral torsion. When the reset ring is reset, it can also absorb lateral vibration and lateral torsion, which can reduce the lateral vibration and displacement, and prepare for the next extrusion deformation. The shock-proof and displacement-proof structure also includes a suction disc foot for reducing longitudinal vibration and lateral displacement provided at the lower end of the suction disc foot bracket. On the one hand, after the air in the suction slot is pressed out. As a result, the air pressure inside the suction disc foot is lower than the air pressure outside the suction disc foot, and the suction disc foot is less likely to be pulled up. This can not only reduce the longitudinal vibration and displacement of the kitchen appliance, but also improve the stability of the kitchen appliance. On the other hand, the suction disc foot has a certain height and a certain elasticity, which can not only help the kitchen appliance to absorb the shock and fixation, but also facilitate heat dissipation of the parts above the base.
12. In the present disclosure, the locking between the blade holder and the blade assembly fixing lock can be implemented by rotating the blade assembly fixing lock. The pressing block will be pressed against the wave-shaped washer and the wave-shaped washer will be deformed. The pressing block is used to press the wave-shaped washer and restricting the wave-shaped washer from shaking around.
13. In the present disclosure, the wave-shaped washer will also have some elasticity when being compressed, so that the wave-shaped washer can have a shock-proof effect and prevent the blade assembly from loosening. The assembly is simple. The sealing ring and the wave-shaped washer having compressibility also helps the blade assembly fixing lock to be screwed into the blade holder more easily.
14. In the present disclosure, the blade holder post penetrates and is thus fixed on the bottom wall of the container cup. A sealing ring is installed between the blade holder and the bottom wall of the container cup. A plurality of sealing concentric rings are protruded and distributed on the upper and lower surfaces of the sealing ring respectively, to improve the sealing between the blade holder and the bottom wall of the container cup.
15. In the present disclosure, the blade assembly fixing lock locked with the blade holder 801 through a screw buckle assembly, to implement screwing and fixing between the blade assembly fixing lock and blade holder post, the operation is convenient, and the structure is simple.
16. In the present disclosure, at least two spanner bars are evenly formed on an outer wall along a circumferential direction on the outer wall of the blade assembly fixing lock. Limit ribs and fool-proof anti-dropping ribs are respectively provided on the cup holder and mainframe upper cover, for restricting forward/reverse rotation of the blade assembly fixing lock. This can achieve a two-way anti-dropping function. The structure is simple, reliable, practical, safe, stable, and highly controllable, which can greatly reduce the chance of mechanical hazards.
17. In the present disclosure, the upper clutch, the star-shaped cylindrical slot and the shock-proof pad are designed into an even-numbered star-shaped structure. The assembly has high stability and high concentricity, which helps to reduce the noise and vibration of the whole machine.
18. In the present disclosure, the power transmission connection between the upper and lower clutches has a soft rubber buffer, which can greatly reduce the noise and vibration of the whole machine during high-speed stirring, and provide a better user experience.
19. In the present disclosure, the upper clutch and the star-shaped cylindrical slot are designed into an even-numbered star-shaped structure. The lower clutch can be designed with three equally spaced glue feeding points for injection molding, so that the size is stable and the concentricity is high during injection molding, which can further effectively reduce the vibration and noise generated by the blade holder.
20. In the present disclosure, the blade holder is inserted through and assembled on the bottom wall of the container cup, and the blade assembly fixing lock is inserted and installed on the blade holder from bottom to top, to implementing fixing and locking the blade assembly. The operation is convenient and the structure is simple.
21. In the present disclosure, when water accumulates on the mainframe upper cover , the staggered water retaining wall and the water retaining ring can increase the flow paths of the liquid in the gap between the lower clutch and the mainframe upper cover as much as possible, thereby reducing amount of water overflow in the motor hole as much as possible. This can reduce the drainage burden of the drainage tray under the motor hole.
22. In the present disclosure, the blade assembly fixing lock includes an upper lock sleeve and a lower lock sleeve. The upper lock sleeve and the blade holder are locked with each other through the screw buckle assembly, so that the blade assembly fixing lock and the blade holder post are screwed and fixed, and the operation is convenient and the structure is simple.
23. In the present disclosure, at least two spanner bars are evenly formed on an outer wall along a circumferential direction on the outer wall of the lower lock sleeve. Limit ribs and fool-proof anti-dropping ribs are respectively provided on the cup holder and mainframe upper cover, for restricting forward/reverse rotation of the blade assembly fixing lock. This can achieve a two-way anti-dropping function.
24. In the present disclosure, put the wear-resistant insert structure into a plastic mold of the blade assembly fixing lock and then carry out injection molding, so that the wear-resistant insert structure can be embedded in the blade assembly fixing lock and integrated with the blade assembly fixing lock. This method not only can effectively reduce the weariness degree of the friction surface of the blade assembly fixing lock, but also can be convenient to be assembled, greatly reducing the manufacturing cost.
25. In the present disclosure, the wear-resistant ear is embedded in the locking surface of the fixing lock screw buckle and matches the shape of the locking surface. When the to-be-locked member is locked in the fixing lock screw buckle, the wear-resistant ear is located between the fixing lock screw buckle and the to-be-locked member, which can greatly improve the wear resistance of the fixing lock screw buckle without affecting the locking function of the fixing lock screw buckle.

### BRIEF DESCRIPTION OF THE DRAWINGS

The technical solutions of the present disclosure will be further described in detail below with reference to the drawings and embodiments. However, it should be understood that these drawings are only designed for explanatory purposes, and therefore are not intended to limit the scope of the present disclosure. In addition, unless otherwise specified, these drawings are only intended to conceptually illustrate the structure described herein, and are not necessarily drawn to scale.
Fig. 1 is a schematic exploded view of the present disclosure;
Fig. 2 is a schematic exploded view of a mainframe housing and a container cup assembly in an assembled state;
Fig. 3 is a schematic longitudinal cross-sectional view of the present disclosure;
Fig. 4 is a schematic enlarged view of part A in Fig. 3;
Fig. 5 is a schematic enlarged view of part B in Fig. 3;
Fig. 6 is a schematic structural diagram of a container cover;
Fig. 7 is a schematic structural diagram of a mainframe upper cover;
Fig. 8 is a schematic structural diagram of the mainframe upper cover from another angle;
Fig. 9 is a schematic cross-sectional view of Fig. 8;
Fig. 10 is a schematic structural diagram of a container cup fixing structure;
Fig. 11 is a schematic enlarged view of part C in Fig. 10;
Fig. 12 is a schematic structural diagram of the container cup fixing structure from another angle;
Fig. 13 is a schematic exploded view of the container cup assembly;
Fig. 14 is a schematic structural diagram of a handle safety link;
Fig. 15 is a schematic longitudinal cross-sectional view of the present disclosure;
Fig. 16 is a schematic structural diagram of a mainframe safety link;
Fig. 17 is a schematic exploded view of the container cup assembly with the container cover removed;
Fig. 18 is a schematic exploded view of a blade assembly and a blade assembly fixing lock in the assembled state;
Fig. 19 is a schematic exploded view of a hollow washer and a lower clutch in the assembled state;
Fig. 20 is a schematic structural diagram of the blade assembly fixing lock;
Fig. 21 is a schematic longitudinal cross-sectional view of the mainframe housing;
Fig. 22 is a schematic structural diagram of a water receiving tray;
Fig. 23 is a schematic structural diagram of a shock-proof pad;
Fig. 24 is a schematic exploded view of the mainframe housing;
Fig. 25 is a schematic exploded view of a mainframe base;
Fig. 26 is a schematic structural diagram of the mainframe base;
Fig. 27 is a schematic exploded view of a weighing foot assembly;
Fig. 28 is a control circuit diagram of a motor;
Fig. 29 is a schematic longitudinal cross-sectional view of the present disclosure;
Fig. 30 is a schematic structural diagram of a reset ring;
Fig. 31 is a schematic enlarged view of part A in Fig. 29;
Fig. 32 is a schematic structural diagram of the base;
Fig. 33 is a schematic cross-sectional view of the container cup assembly;
Fig. 34 is a schematic enlarged view of part B in Fig. 33;
Fig. 35 is a schematic exploded view of the blade assembly;
Fig. 36 is a schematic structural diagram of a wave-shaped washer;
Fig. 37 is a schematic diagram of an exploded structure;
Fig. 38 is a schematic diagram of a cross-sectional structure;
Fig. 39 is a schematic enlarged view of part A in Fig. 38;
Fig. 40 is a schematic exploded view of the container cup assembly;
Fig. 41 is a schematic structural diagram of the blade assembly;
Fig. 42 is a schematic structural diagram of the lower clutch;
Fig. 43 is a schematic structural diagram of the shock-proof pad;
Fig. 44 is a schematic exploded view of the shock-proof pad and the lower clutch;
Fig. 45 is a schematic diagram of the structure;
Fig. 46 is a schematic enlarged view of part B in Fig. 45;
Fig. 47 is a schematic diagram of the structure;
Fig. 48 is a schematic structural diagram of the blade assembly fixing lock;
Fig. 49 is a schematic diagram of the structure;
Fig. 50 is a schematic bottom view of the container cup assembly;
Fig. 51 is a schematic top view of the mainframe housing;
Fig. 52 is a schematic structural diagram of the mainframe upper cover;
Fig. 53 is a schematic structural diagram of a blade assembly screw lock;
Fig. 54 is a schematic exploded view of the blade assembly screw lock;
Fig. 55 is a schematic structural diagram of a wear-resistant insert;
Fig. 56 is a schematic exploded view of the container cup;
Fig. 57 is a schematic cross-sectional view of the container cup;
Fig. 58 is a schematic enlarged view of part A in Fig. 57;

In the drawings: 1. Mainframe upper cover, 101. Upper cover side wall, 102. Upper cover bottom wall, 103. Upper cover outer edge, 104. Avoidance slot, 2. Mainframe base,
3. Motor, 4. Container cup assembly, 5. Weighing foot assembly, 6. Container cup, 601. Cover locking protrusion, 7. Cup holder, 8. Blade assembly, 801. Blade holder,
802. Blade set, 9. Container cover, 901. Lock cover screw buckle, 10. Handle shell,
1001. Handle base, 1002. Handle cover, 11. Locking buckle member, 1101. Lock bracket, 1102. Locking buckle sliding portion, 1103. Locking buckle head, 1104. Locking buckle boss, 1105. First return spring, 12. Locking buckle opening, 13. Rotating ring, 14. Release lever, 15. Rotating ring boss, 16. Fixing hole, 17. Tension spring, 18. Arc-shaped through slot, 19. Arc-shaped sliding slot, 20. Ring-shaped guiding wheel, 21. Handle safety link, 2101. Link body, 2102. Driving inclined surface, 2103. Driving rod, 22. Second return spring, 23. Hook-type buckle, 24. Micro switch,
25. Mainframe safety link, 2501. Safety link body, 2502. Trigger inclined surface,
2503. Upper trigger lever, 2504. Lower trigger lever, 2505. Water receiving trough,
2506. Drainage hole, 2507. Overflow channel, 26. Micro switch bracket, 27. Upper clutch, 28. Lower clutch, 29. Hollow washer, 30. Blade assembly fixing lock,
3001. Spanner bars, 3002. Upper lock sleeve, 3003. Lower lock sleeve, 31. Wave-shaped washer, 32. Pressing block, 33. Sealing ring, 34. Cup holder hole,
35. Limit rib, 36. Fool-proof anti-dropping rib, 37. Lump, 38. Fixing lock screw buckle, 39. Shock-proof pad structure, 3901. Arch-shaped shock-proof pad body,
3902. Shock-proof pad support rod, 3903. Limit step, 40. Shock-proof seat structure,
41. Shock-proof rubber sleeve, 42. Shock-proof washer, 43. Peripheral rib,
44. Sleeve column, 45. Shock-proof sleeve, 46. Side drainage hole, 47. Water receiving tray, 4701. Receiving tray surface, 4702. Outer tray wall, 4703. Water receiving notch, 4704. Water guiding lip, 4705. Inner tray wall, 48. Water retaining ring, 49. Water retaining wall, 50. Base drainage pipe, 51. Water receiving pipe, 52. Drainage gap, 53. Cantilever beam assembly, 5301. Cantilever beam, 5302. Outlet end, 5303. Patch, 54. Upper steel plate, 55. Weighing sensor bracket, 5501. Weighing avoidance slot, 5502. Fitting slot, 5503. First hollow positioning post,
56. Suction disc foot bracket, 5601. Second hollow positioning post, 5602. Positioning ring, 57. Reset ring, 5701. Hollow shock-absorbing hole, 58. Suction disc foot, 59. Via hole for the suction disc foot, 60. Screw post, 61. Positioning screw,
62. Anti-fall nut, 63. Self-tapping screw, 53011. First threaded hole, 53012. Second threaded hole, 64. Tooth screw, 55021. Plane positioning rib,
55022. Reinforcing rib, 65. Stainless steel washer, 5801. Rubber foot part, 5802. Suction disc part, 5803. Suction slot, 803. Blade holder post, 804. Blade holder table,
805. Blade set shaft, 3301. Sealing concentric ring, 66. Clutch assembly,
67. Star-shaped cylindrical slot, 68. Shock-proof pad, 2901. Washer outer edge,
2902. Outer edge slot, 69. Mainframe housing, 30011. Spanner bar body, 30012. Wrench slot, 3801. Guiding inclined surface, 3802. Locking flat surface, 3803. Blocking inclined surface, 70. Wear-resistant insert structure, 701. Wear-resistant insert body, 702. Wear-resistant ear, 703. Positioning notch, 7021. Flat wear-resistant portion, 7022. Curved wear-resistant portion, 704. Anti-shake protrusion.

### DETAILED DESCRIPTION

First of all, it should be noted that the specific structure, features, and advantages of the present disclosure will be described in detail below by way of examples. However, all the descriptions are only for illustration and should not be construed as limiting the present disclosure.

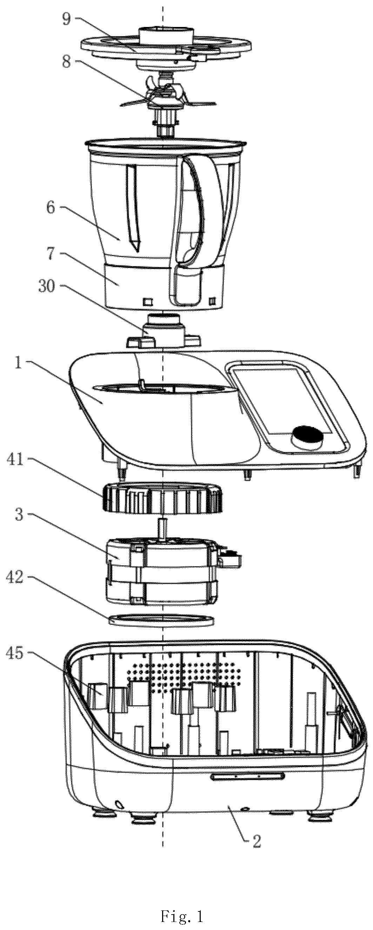

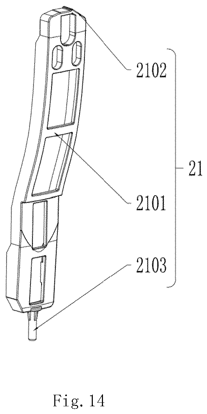

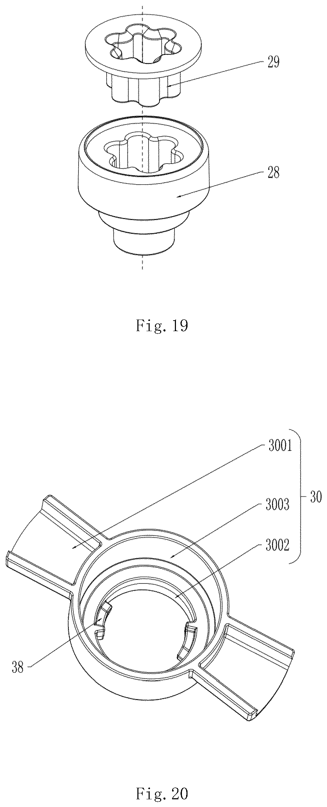

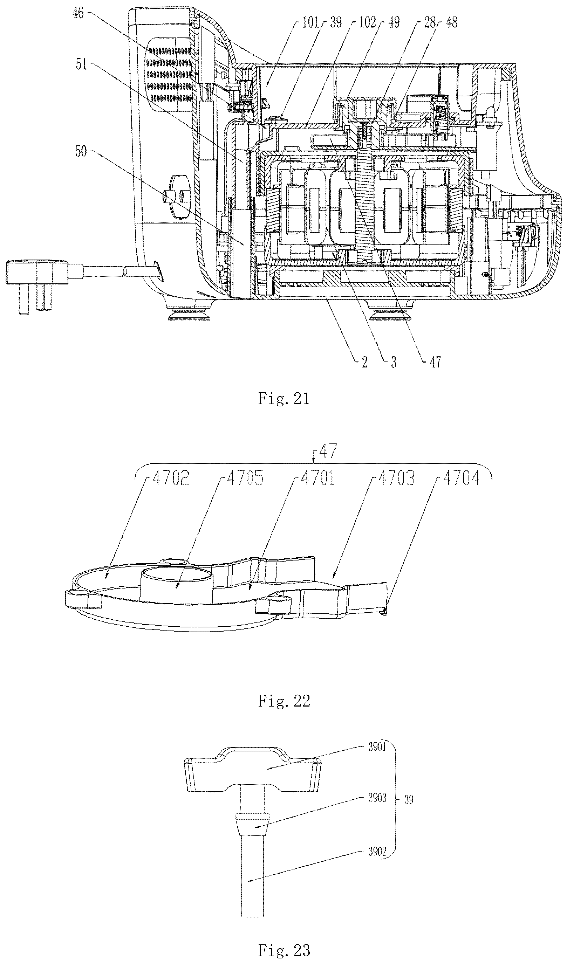

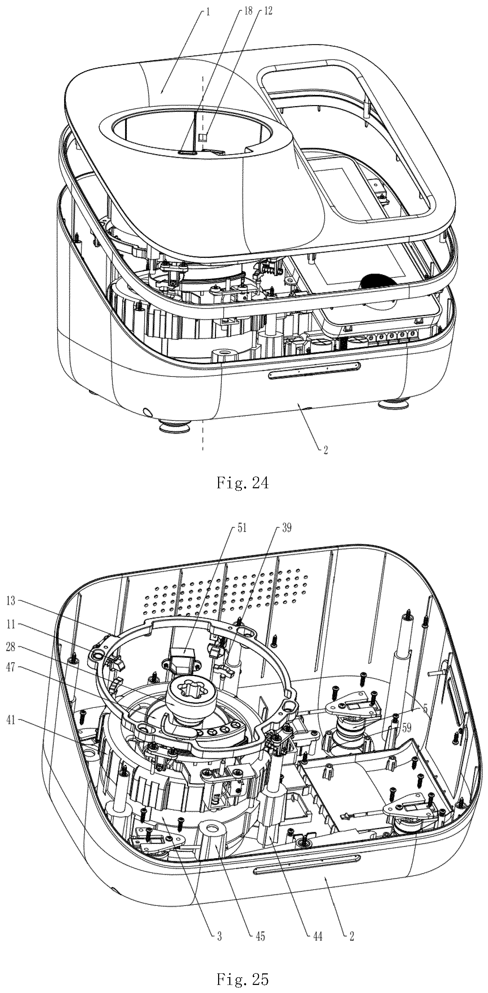

In the present disclosure, unless otherwise clearly defined and limited, the terms "installation", "setting", "connection", "fixing", "spinning" and other terms should be understood in a broad sense. For example, it can be a fixed connection or a detachably connection or an integrated connection; it can be mechanically connected or electrically connected; it can be directly connected or indirectly connected through an intermediary, and it can be the internal communication of two components or interaction between two components. Unless specifically defined otherwise, those of ordinary skill in the art can understand the specific meanings of the above terms in the present disclosure according to specific circumstances. Hereinafter, the present disclosure will be described in detail with reference to Figs. 1 to 28.

### Example 1

The present disclosure relates to the field of cooking appliances. Taking the product of a stir-frying cooking appliance as an example, a stirring cooking machine includes a mainframe housing, a motor 3 assembled in the mainframe housing, and a container cup assembly 4 detachably assembled on the mainframe housing. The mainframe housing includes an integrally installed mainframe upper cover 1 and a mainframe base 2. Each corner end of the mainframe base 2 is respectively provided with an installation position, and the container cup assembly 4 is locked/unlocked with the mainframe housing through a container cup fixing structure. The container cup assembly 4 and the motor 3 are interlocked with each other through a cover opening protection structure, a blade assembly in the container cup assembly 4 and the motor 3 are interlocked with each other through a blade assembly fixing structure, and a weighing foot assembly 5 is suspended and installed at the installation position.

Structure and Operation: In this technical solution, the container cup assembly 4 and the mainframe housing are separated bodies. One mainframe housing can be matched with a plurality of container cup assemblies 4 with various functions. In assembling, a container cup assembly 4 is inserted into the mainframe upper cover 1, and locked with the mainframe housing through the container cup fixing structure. When the container cup assembly 4 needs to be removed, the container cup assembly 4 can also be unlocked from the mainframe housing through the container cup fixing structure. The operation is easy, making the mainframe housing very stable to hold the container cup assembly 4 without concerning the problem of the container cup assembly 4 coming out or shaking, which can greatly improve the user experience. When the container cup assembly 4 is assembled, the container cup assembly 4 and the motor 3 are interlocked with each other through the cover opening protection structure, so that the motor 3 can be controlled to start or stop. The structure is simple, reliable, practical, safe, stable, controllable, and low in cost. It is suitable for market promotion in the field of kitchen appliances. Since the blade assembly in the container cup assembly 4 and the motor 3 are interlocked with each other through the blade assembly fixing structure, the noise and vibration of the whole machine can be greatly reduced during high-speed stirring, providing a better user experience. Since the weighing foot assembly 5 is suspended and installed at the installation position, on the one hand, even if the mainframe is fully loaded with food on a slanted place of the tabletop, the weighing foot assembly 5 won't touch a via hole for a suction disc foot, which can ensure the accuracy of weighing; on the other hand, it can provide multiple drainage gaps for the mainframe to prevent overflow for the whole machine.

Furthermore, in this example, it can also be contemplated that the container cup assembly 4 includes a container cup 6 and a cup holder 7 which are connected as one body, and a blade assembly 8 assembled inside the container cup 6, a container cover 9 buckled on the container cup 6, and a handle shell 10 fixed on one side of the container cup 6. The handle shell 10 includes a handle base 1001 and a handle cover 1002 assembled on the handle base 1001. The handle base 1001 is cut with a hollow working slot therein along its length direction, which gives the handle shell new functionality in that the handle shell can be used as an ordinary handle, practical, simple, aesthetic, and low in cost, and can also be used as an interlocked structure between the container cover 9 and the motor 3. Only upon detection that the container cover 9 is screwed tightly to the container cup 6, the motor 3 is allowed to start working, which is safe and reliable. The handle is multi-functional, and is suitable for market promotion.

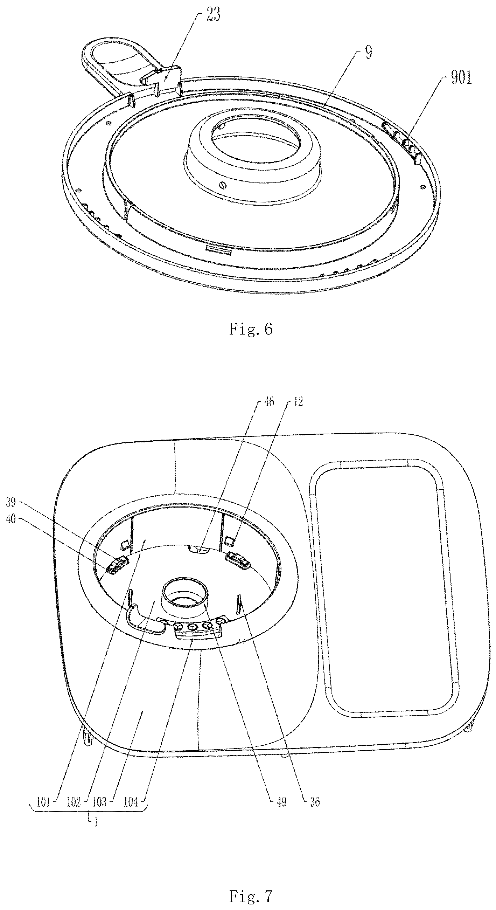

Furthermore, in this example, it can also be contemplated that, as shown in Fig. 6, at least two cover locking screw buckles 901 are distributed on the container cover 9 with an interval, and the cover locking screw buckles 901 open toward the rotation direction of the container cover. On the outer side of the rim of the container cup 6, cover locking protrusions 601 are protruding and formed, which can respectively be screwed into the cover locking screw buckles 901 one to one. The container cover 9 can be screwed tightly on the container cup 6 through the cover locking screw buckles 901 and the cover locking protrusions 601.

Further, in this example, it can also be contemplated that, as shown in Figs. 7-8, the mainframe upper cover 1 includes an upper cover side wall 101 in a cylindrical surface form, an upper cover bottom wall 102 closing at the lower part of the upper cover side wall 101, and a circle of upper cover outer edge 103 formed on the upper edge of the upper cover side wall 101 and extending outwards. One side of the upper cover side wall 101 and the upper cover outer edge 103 is provided with an avoidance slot 104 for avoiding the lower end of the handle shell 10. A container cup installation space is formed above the upper cover bottom wall, and an electrical appliance installation space is formed below the upper cover bottom wall. In assembling, the cup holder 7 along with the container cup 6 is inserted into the mainframe upper cover 1, and the handle shell 10 is aligned with the avoidance slot 104 and inserted therein. It should be noted that the avoidance slot 104 is opened on the side of the mainframe upper cover 1 for avoiding the lower end of the handle shell 10, and the avoidance slot 104 can also have a positioning function, so that the container cup assembly 4 can only be inserted into the mainframe upper cover 1 in one direction.

### Example 2

Example 2 of the present disclosure is further improved on the basis of the Example 1, so as to fully exhibit the technical advantages of the present disclosure, which will be exemplified below.

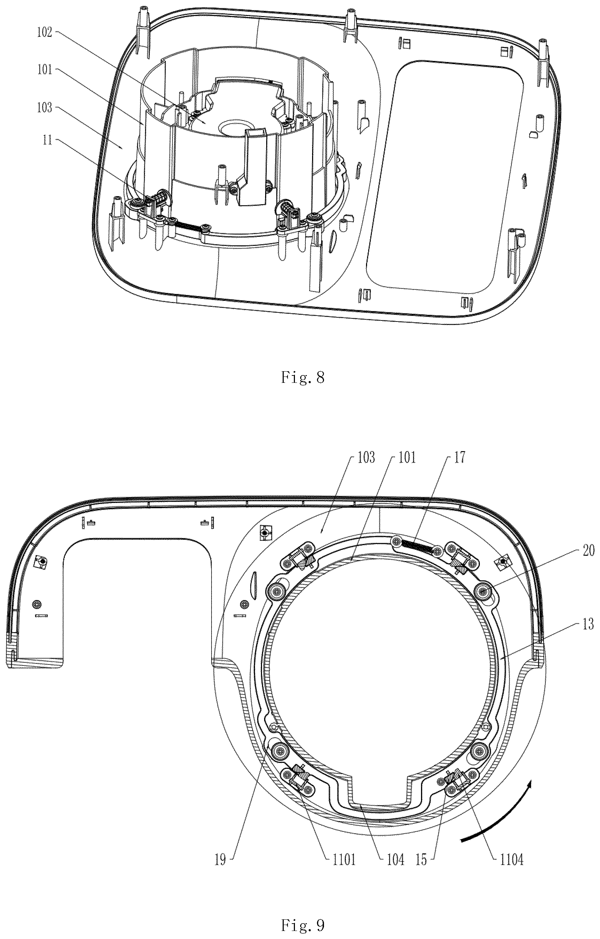

For example: as shown in Figs. 9-12, the container cup fixing structure includes locking buckle members 11, locking buckle openings 12, a rotating ring 13, fixing holes 16 and tension springs 17.

The number of the locking buckle members 11 is at least three, and the locking buckle members 11 are evenly distributed on the periphery of the upper cover side wall 101. The locking buckle member 11 includes a locking buckle bracket 1101 and a locking buckle that can be extended/retracted on the locking buckle bracket 1101. The locking buckle bracket 1101 is fixed on the upper cover outer edge 103 on the periphery of the upper cover side wall 101, the plane where the locking buckle bracket 1101 is located is tangent to the upper cover outer edge, and the central axis of the locking buckle bracket 1101 and the central axis of the locking buckle are perpendicular to each other, and a sliding hole for sliding fit with the locking buckle is opened therethrough on the locking buckle bracket 1101.

The locking buckle openings 12 are of the same number as the number of the locking buckle members 11, and the locking buckle openings 12 are evenly provided on the upper cover side wall 101 and correspond to the locking buckles one to one, for the locking buckles to extend/retract.

The rotating ring 13 is rotatably assembled on the periphery of the upper cover side wall 101, and is provided with a release lever 14 for turning the rotating ring 13 to rotate, and rotating ring bosses 15 for driving the locking buckles to retract.

The fixing holes 16 are of the same number as the number of the locking buckle members 11, and the fixing holes 16 are evenly provided on the side wall of the cup holder 7 and for the locking buckles to be inserted in the fixing holes 16 one to one. The fixing holes 16 are used for the ends of the locking buckles to extend/exit to implement locking/unlocking the container cup assembly 4.

The tension spring 17 has one end fixed on the rotating ring 13 and the other end fixed on the upper cover outer edge 103.

The locking operation of the locking buckle members 11: The number of the locking buckle members 11 is at least three, and the locking buckle members 11 are evenly distributed on the periphery of the mainframe upper cover 1. The locking buckle brackets 1101 are fixed on the mainframe upper cover 1, and the locking buckles can be extended/retracted on the locking buckle brackets 1101. In a free state, first return springs on the locking buckle members 11 push the locking buckles outward, and make the ends of the locking buckles extend out of the locking buckle openings 12. When the container cup assembly 4 is put into the mainframe housing, the bottom edge of the container cup assembly 4 presses inclined surfaces of the locking buckle heads downward, and the locking buckles retract into the locking buckle openings 12. When the container cup assembly 4 is placed at the bottom, under the action of the elastic force of the first return springs, the locking buckles are continued to extend outward and into the fixing holes 16 of the container cup assembly 4 to implement the locking of the container cup assembly 4, so that the mainframe housing can hold the container cup assembly 4 securely. With at least three locking buckle members 11, the container cup assembly 4 can be locked in all directions without concerning the problem that the container cup assembly 4 would come out or shake, which can greatly improve the user experience.

The unlocking operation of the locking buckle members 11: Since the release lever 14 is locked on the rotating ring 13, when the release lever 14 is turned clockwise, and the rotating ring bosses 15 of the rotating ring 13 press and expand locking buckle bosses of the locking buckle members 11, making the locking buckles retract into the locking buckle openings 12. When the locking buckles exit the fixing holes of the container cup assembly 4, the container cup assembly 4 can be lifted, and thus the container cup assembly 4 can be easily unlocked by the release lever 14, which is easy to operate.

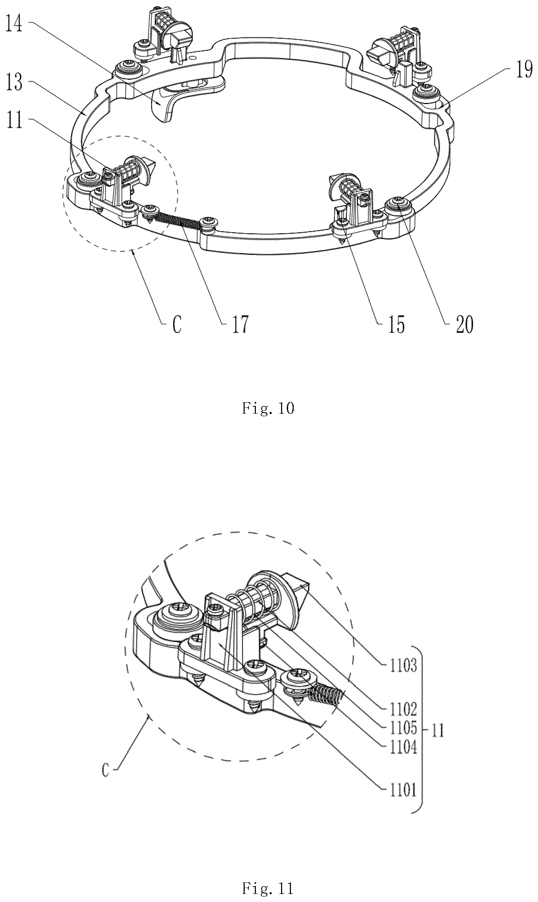

Furthermore, in this example, it can also be contemplated that, as shown in Fig. 11, the locking buckle includes a locking buckle sliding portion 1102, a locking buckle head 1103, a locking buckle boss 1104, and a first return spring 1105.

The locking buckle sliding portion 1102 is perpendicular to the locking buckle bracket 1101 and can slide freely on the locking buckle bracket 1101. The line of the axis of the locking buckle sliding portion 1102 is parallel to the radial direction of the upper cover side wall 101, and the locking buckle sliding portion 1102 is provided with a limit block at one end away from the upper cover side wall.

The locking buckle head 1103 is installed at one end of the locking buckle sliding portion 1102 proximate to the upper cover side wall, and has a right-angle trapezoidal block structure. A limit ring is provided between the locking buckle head 1103 and the locking buckle sliding portion 1102. The size of the limit ring is much larger than the size of the locking buckle opening 12, to prevent the locking buckle head 1103 from extending outward too much. The thickness of the part of the locking buckle head 1103 away from the locking buckle sliding portion 1102 is smaller than the thickness of the part of the locking buckle head 1103 proximate to the locking buckle sliding portion 1102. The upper surface of the locking buckle head 1103 is an inclined surface and the lower surface of the locking buckle head 1103 is a horizontal surface.

The locking buckle boss 1104 is installed on the locking sliding part, and is a right-angle trapezoidal block structure.

The first return spring 1105 is sleeved on the locking buckle sliding portion 1102 between the locking buckle bracket 1101 and the locking buckle head 1103.

The locking operation of the locking buckles. The number of the locking buckle brackets 1101 is at least three, and the locking buckle brackets 1101 are evenly distributed on the periphery of the mainframe upper cover. The locking buckles can be extended/retracted on the locking buckle brackets 1101. In a free state, the first return springs 1105 are in a freely stretched state to push the locking buckle heads 1103 outward, and the locking buckle heads 1103 extend to the outside of the locking buckle openings 12. When the container cup assembly 4 is placed in the mainframe housing, the bottom edge of the container cup assembly 4 presses down the inclined surfaces of the locking buckle heads 1103, and the locking buckle heads 1103 are pressed to retract into the locking buckle openings 12. At this time, the first return springs 1105 are in a compressed state. When the container cup assembly 4 is placed at the bottom, under the elastic force of the first return springs 1105, the locking buckle heads 1103 continues to extend outward and into the fixing holes of the container cup assembly 4 to implement the locking of the container cup assembly 4.

The unlocking operation of the locking buckles. Since the release lever 14 is locked on the rotating ring 13, when the release lever 14 is turned clockwise, the rotating ring bosses 15 of the rotating ring 13 press and expand the locking buckle bosses 1104 of the locking buckle members 11, the locking buckle sliding portions 1102 then move in the sliding holes, and then the locking buckle heads 1103 retract into the locking buckle openings 12. When the locking buckle heads 1103 exit the fixing holes of the container cup assembly 4, the container cup assembly 4 can be lifted up, and the container cup assembly 4 can be easily unlocked by the release lever 14, and the operation is convenient.

Furthermore, in this example, it can also be contemplated that, as shown in Figs. 7-12, the rotating ring 13 has a ring structure, and the upper part of the rotating ring 13 is connected with the release lever 14 movably inserted in an arc-shaped through slot 18 of the upper cover outer edge 103, and the lower part of the rotating ring 13 is connected with the rotating ring bosses 15. The number of the rotating ring bosses 15 is the same as the number of the locking buckle members 11. The rotating ring boss 15 is a right-angled trapezoidal block structure, and the inclined surface of the rotating ring boss 15 is opposite to the inclined surface of the locking buckle boss 1104. The rotating ring 13 is provided with at least three arc-shaped sliding slots 19 at equal intervals along the circumferential direction of the rotating ring 13. The arc-shaped sliding slot 19 is engaged with a ring-shaped guiding wheel 20. The ring-shaped guiding wheel 20 is slidably connected to the arc-shaped sliding slot 19 and the ring-shaped guiding wheel 20 is fixedly connected to the upper cover outer edge 103. The rotating ring 13 is fixed to the mainframe upper cover 1 through at least three ring-shaped guiding wheels 20. The ring-shaped guiding wheel 20 is slidably connected to the arc-shaped slide slot 19. When the release lever 14 is turned clockwise, the arc-shaped slide slots 19 slide along the ring-shaped guiding wheels 20. At this time, the tension spring 17 is in an elongated state. When the force acting on the release lever 14 disappears, the tension spring 17 pulls the rotating ring 13 tight in a counterclockwise direction, and the locking buckle members are reset, thus allowing the container cup fixing structure suitable for repeated operations.

### Example 3

Example 3 of the present disclosure is further improved on the basis of Example 1/2, so as to fully exhibit the technical advantages of the present disclosure, which will be exemplified below.

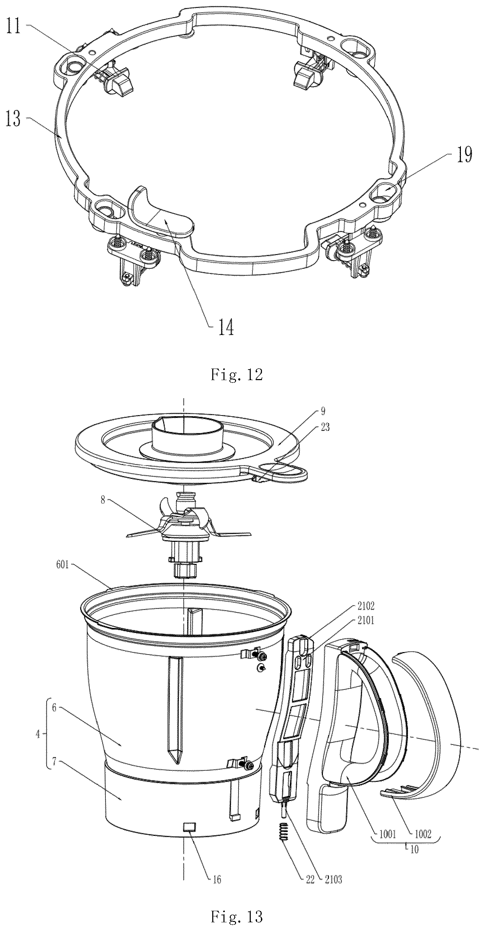

For example, as shown in Figs. 13-15 and 28, the cover opening protection structure includes a handle safety link 21, a second return spring 22, a hook-type buckle 23 and a micro switch 24.

The handle safety link 21 can move up and down in the hollow working slot of the handle base, and includes a link body 2101, a driving inclined surface 2102 and a driving rod 2103 respectively provided on an upper part and a lower part of the link body 2101.

The second return spring 22 is sleeved on the driving rod 2103 and located between the link body 2101 and the handle base 1001.

The hook-type buckle 23 is fixedly connected to the lower end of the container cover 9, and has a buckle inclined surface formed at the lower part thereof for driving the handle safety link 21 to move up and down.

The micro switch 24 is assembled inside the mainframe housing, and the driving rod 2103 drives the elastic leaf of the micro switch 24 to be pressed down/bounced up through a mainframe safety link 25. The micro switch 24 can be but not limited to a model number 159030 micro switch, and can also be implemented as a photoelectric or other switch.

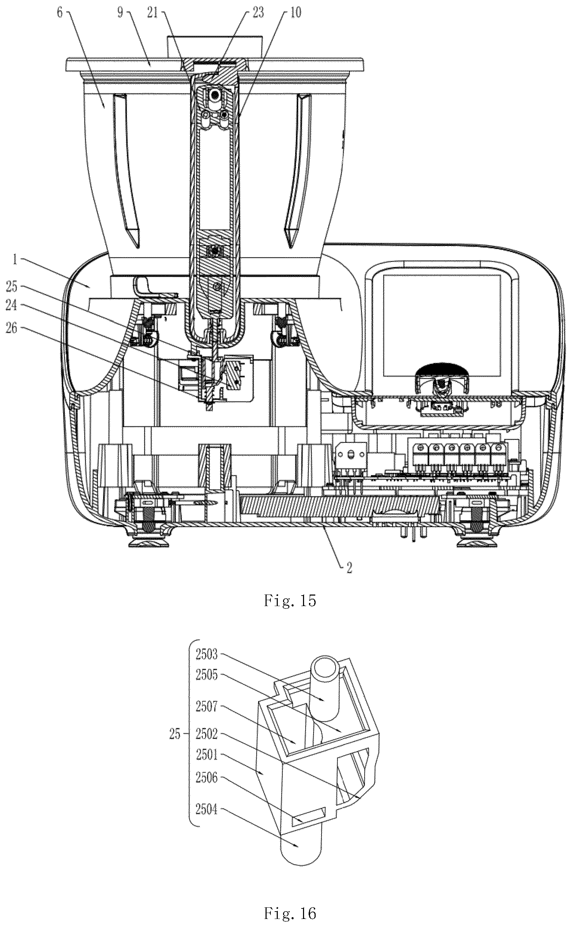

Furthermore, in this example, it can also be contemplated that, as shown in Figs. 6 and 15, the hook-type buckle 23 includes a support portion and a trigger portion which are connected as one body, and the buckle inclined surface is formed at the lower portion of the trigger portion. A positioning slot is recessed on one side of the buckle inclined surface, and one side of the driving inclined surface is raised with a positioning rib that matches with the positioning slot. When the buckle inclined surface presses the driving inclined surface 2102, the driving inclined surface 2102 moves downwards until the positioning rib is just stuck in the positioning slot, and the positioning rib and the positioning slot are restricted to each other, which has a positioning function, and the container cover will not easily loosen when the container cover is screwed tight.

Furthermore, it can be considered in this example that the upper part of the handle base 1001 is provided with an opening for the trigger portion to be inserted in, and the lower part of the handle base 1001 is provided with a first via hole for the driving rod 2103 to extend out of there freely. The link body 2101 is provided with at least two sliding slots along its length direction, and a link guiding wheel is engaged in the sliding slot. The link guiding wheel is slidably connected with the sliding slot, and the link guiding wheel is fixedly connected to the container cup 6 / the handle base 1001. When the link body 2101 moves up and down, the sliding slot can move up and down on the link guiding wheel to have a guiding function and prevent the link body 2101 from displacing during the movement.

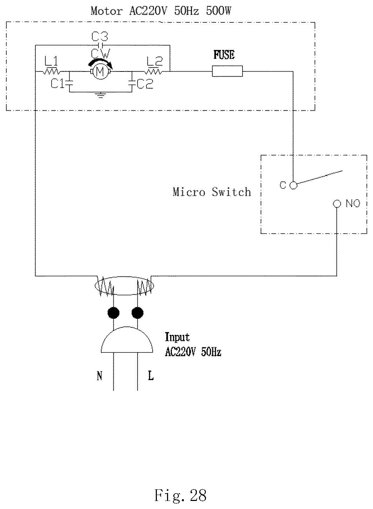

The operation of the cover opening protection structure. When the container cover 9 is screwed in place, the buckle inclined surface of the hook-type buckle 23 presses the driving inclined surface 2102 to drive the handle safety link 21 down as a whole, and at the same time, the handle safety link 21 presses down the mainframe safety link 25, and thus the mainframe safety link 25 presses down the elastic leaf of the micro switch 24 to the lower limit to trigger the micro switch 24 to form a closed circuit. As the micro switch 24 is a part of the control circuit of the motor (as shown in Fig. 28), at this time, the signal current that controls the start of the motor is turned on, and the motor starts to work. That is, the motor can start to work only upon detection that the container cover 9 is screwed tightly on the container cup 6, which can meet the safety requirements and greatly reduce the probability of mechanical hazards. Conversely, when the container cover 9 is unscrewed, the handle safety link 21 is reset when the buckle inclined surface of the hook-type buckle 23 is withdrawn, and at the same time the mainframe safety link 25 is also reset. At this time, the elastic leaf of the micro switch 24 returns to the free state, and the micro switch 24 forms an opened circuit. Then, the signal current that controls the start of the motor is disconnected, and the motor stops working.

Furthermore, in this example, it can also be contemplated that a micro switch bracket 26 is also installed in the mainframe housing, and the mainframe safety link 25 and the micro switch 24 are respectively disposed in the micro switch bracket 26. As shown in Fig. 15, the micro switch bracket 26 is used for positioning/fixing the positions of the mainframe safety link 25 and the micro switch 24, and the elastic leaf of the micro switch 24 is arranged facing the trigger inclined surface of the mainframe safety link 25.

### Example 4

The example 4 of the present disclosure is further improved on the basis of the example 3, so as to fully exhibit the technical advantages of the present disclosure, which will be exemplified below.

For example, as shown in Fig. 16, the mainframe safety link 25 includes a safety link body 2501, a water receiving trough 2505, and a drainage hole 2506.

The safety link body 2501 has a side facing the micro switch 24 which forms a trigger inclined surface 2502 for triggering on/off of the micro switch 24, and the upper and lower parts of the mainframe safety link 25 are vertically connected to an upper trigger rod 2503 and a lower trigger rod 2504 respectively. The avoidance slot 104 is provided with an avoiding hollow cylinder for the upper trigger rod 2503 to penetrate upwards, and the upper trigger rod 2503 penetrates the avoiding hollow cylinder upwards to abut against the driving rod 2103 above the upper trigger rod 2503. The safety link body 2501 serves as a safety interlocked structure. When the container cup assembly 4 is properly assembled on the mainframe upper cover 1, the driving rod presses the upper trigger rod 2503 down, and the safety link body 2501 moves down accordingly, and the trigger inclined surface 2502 presses the elastic leaf of the micro switch 24 down to the lower limit to trigger the micro switch to form a closed circuit. Conversely, when the container cup assembly 4 is removed, the safety link body 2501 is reset, and the elastic leaf of the micro switch returns to the free state, and the micro switch forms an opened circuit, thus providing a simple, reliable, practical, safe, stable, and highly controllable structure.

The water receiving trough 2505 is formed as a recess on the upper part of the safety link body 2501, and the bottom of the water receiving trough 2505 is semi-closed, and disposed under the avoiding hollow cylinder.

The drainage hole 2506 is disposed at the lower part of the safety link body 2501, communicates with the water receiving trough 2505 through an overflow channel 2507, and the water collected in the water receiving trough 2505 can flow out through the overflow channel 2507 and the drainage hole 2506 into a drainage gap 52 and flow out of the mainframe housing, to prevent water from entering the micro switch 24.

Furthermore, in this example, it can also be contemplated that the drainage hole 2506 is provided at least one pair of them, which are disposed on two opposite sides of the lower part of the overflow channel 2507. The lower opening end of the water receiving trough 2505 correspond to the overflow channel 2507 and the drainage holes 2506 up and down.

Furthermore, in this example, it can also be contemplated that the upper part of the micro switch bracket 26 is provided with a slot for inserting the safety link body 2501, and the lower part thereof is provided with a via hole for the lower trigger rod 2504 to extend out of there freely. A third return spring is sleeved on the lower trigger rod 2504 between the safety link body 2501 and the micro switch bracket 26. When the container cup assembly is removed, under the action of the elastic force of the third return spring, the mainframe safety link 25 is reset, and the elastic leaf of the micro switch 24 is restored to the free state.

### Example 5

The example 5 of the present disclosure is further improved on the basis of the example 1/2/3/4, so as to fully exhibit the technical advantages of the present disclosure, which will be exemplified below.

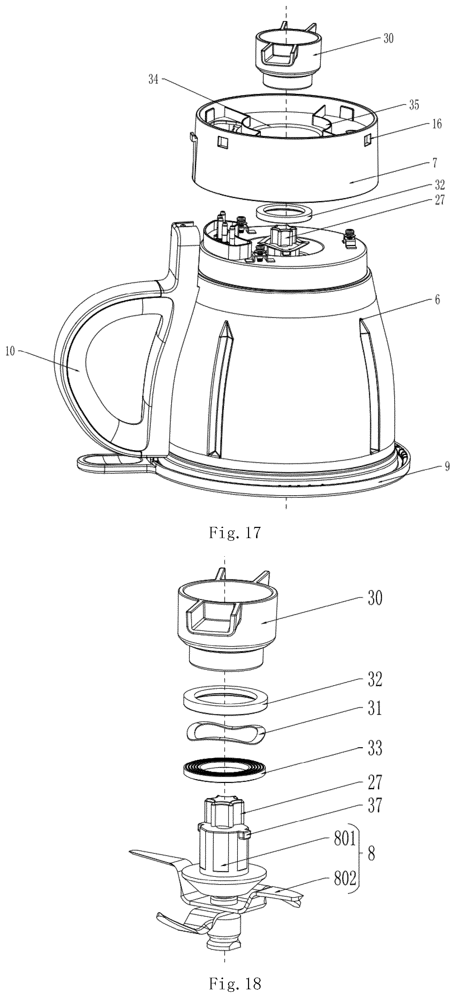

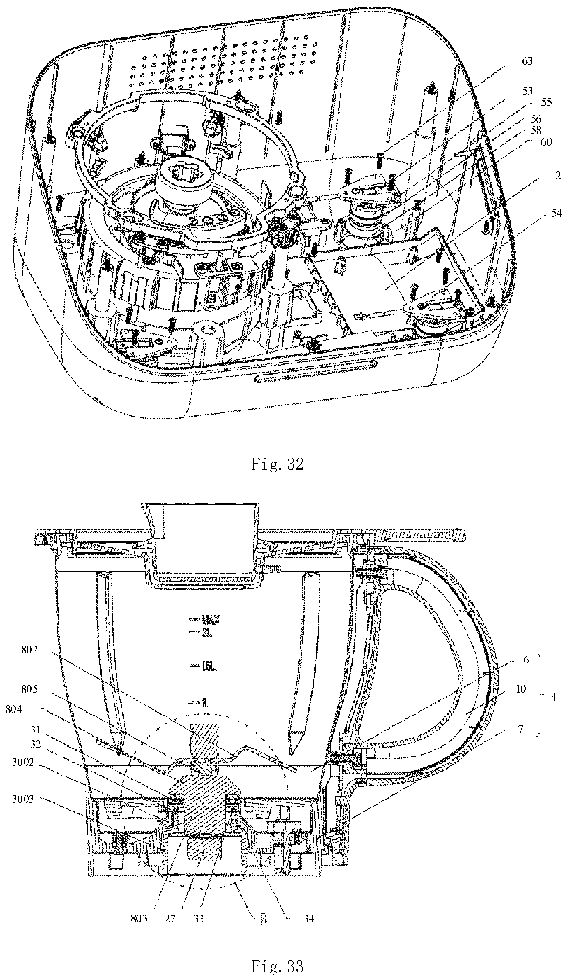

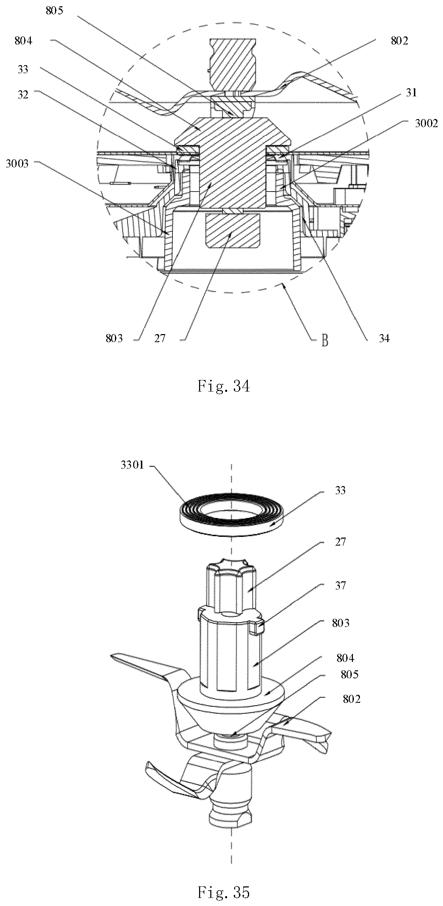

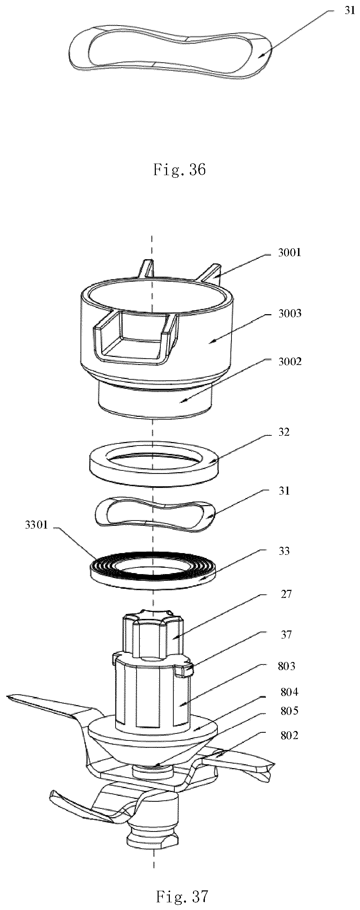

For example, as shown in Figs. 17-20 and 33-40, the blade assembly fixing structure includes a blade assembly 8 and a blade assembly fixing lock 30.

The blade assembly 8 includes a blade holder 801 assembled on the bottom wall of the container cup, and at least two groups of blade sets 802 arranged staggered with each other up and down.

The blade assembly fixing lock 30 is movably sleeved on the outside of the blade holder 801 and locked with the blade holder 801 through a screw buckle assembly, and at least two spanner bars 3001 are evenly formed on the outer wall along the circumferential direction.

Further preferably, a sealing ring 33 is installed between the blade holder 801 and the bottom wall of the container cup 6 (also the bottom wall of the container cup assembly 4).

A wave-shaped washer 31 and a pressing block 32 are sleeved on the blade holder 801 between the bottom wall of the container cup 6 and the blade assembly fixing lock 30.

Further preferably, the blade assembly fixing structure further includes: a clutch assembly 66.

The clutch assembly 66 includes an upper clutch 27 and a lower clutch 28, and the upper clutch can be matched with and inserted on the lower clutch.

More preferably, the upper clutch 27 is coaxially arranged under the blade holder 801, and is a star-shaped cylindrical structure with even-numbered sides.

The lower clutch 28 is coaxially arranged above the motor, and its upper surface is recessed from the middle part to form a star-shaped cylindrical slot for the upper clutch 27 to be matched and inserted therein.

The clutch assembly 66 includes an upper clutch 27 that is rotatably installed below the blade holder through a blade set shaft 805, and a lower clutch 28 that is coaxially installed on the upper end of the motor shaft of the motor. When the container cup assembly 4 is assembled in the mainframe upper cover 1, the upper clutch 27 can be matched and inserted on the lower clutch 28 to implement the transmission connection among the blade set 802, the blade set shaft 805, the upper clutch 27, the lower clutch 28, and the motor.

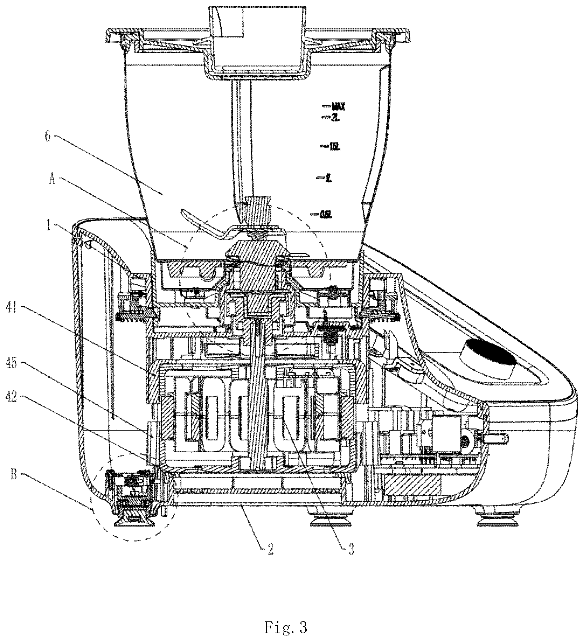

In this technical solution, as shown in Figs. 3, 17-20, 33-40, after the blade holder 801 is inserted through and assembled on the bottom wall of the container cup, the blade assembly fixing lock 30 is inserted and installed on the blade holder 801 from bottom to top, and rotates the blade assembly fixing lock 30 in the forward direction. Taking Fig. 3 as an example, when the blade assembly fixing lock 30 rotates counterclockwise (forward rotation), the blade assembly fixing lock 30 can be locked with the blade holder through the screw buckle assembly. When the container cup assembly is assembled on the mainframe upper cover 1, the upper clutch 27 can be matched and inserted on the lower clutch 28 to implement the power transmission connection among the blade set, the blade set shaft, the upper clutch, the lower clutch and the motor.

Structure and Operation: In this technical solution, the blade holder 801 penetrates and is thus installed on the bottom wall of the container cup 6, and a sealing ring 33 is installed between the blade holder 801 and the bottom wall of the container cup 6 to improve the sealing between the blade holder 801 and the container cup 6. After that, the wave-shaped washer 31 and the pressing block 32 are sequentially sleeved on the blade holder 801 from bottom to top, and then the blade assembly fixing lock 30 is inserted into the blade holder from bottom to top and the blade assembly fixing lock 30 is rotated to implement the locking of the position between the blade holder 801 and the blade assembly fixing lock 30, in which: the pressing block 32 is used to press the wave-shaped washer 31 and restricting the wave-shaped washer 31 from shaking around, the blade assembly fixing lock 30 resists against the pressing block 32 to prevent the pressing block 32 not be pushed away by the wave-shaped washer 31. When the blade assembly fixing lock 30 tightens the blade assembly 8, the pressing block 32 will be pressed against the wave-shaped washer 31 and the wave-shaped washer 31 will be deformed. The sealing ring 33 is made of soft rubber and can have a shock-proof effect when being compressed. The wave-shaped washer 31 will also have some elasticity when being compressed, so that the wave-shaped washer 31 can have a shock-proof effect and prevent the blade assembly 8 from loosening. In this solution, the blade assembly 8 is tightened by the blade assembly fixing lock 30, and the resilient wave-shaped washer 31 fixed on the container cup is pressed by the pressing block 32, which can prevent the blade assembly 8 from loosening and can prevent shock. The assembling is simple, and it is also easy to screw in the blade assembly fixing lock 30.

Furthermore, in this example, it can also be contemplated that the upper clutch 27 and the star-shaped cylindrical slot are respectively a hexagram cylindrical structure with six circular arcs/tooth-shaped protrusions distributed along the circumferential direction, and the edges of the upper clutch 27 or the star-shaped cylindrical slot have arc-shaped transitions, and the transmission connection between the upper and lower clutches has a soft rubber buffer, which can improve the stability and concentricity of the assembly, and can reduce the noise and vibration of the whole machine.

In this example, it can also be contemplated that the upper clutch 27 and the star-shaped cylindrical slot 67 can be matched and inserted into one body.

Furthermore, in this example, it can also be contemplated that the blade holder 801 includes a blade holder post 803 and a blade holder table 804 with a circular table structure formed on the blade holder post. The blade sets and the upper clutch are rotatably installed on the upper and lower sides of the blade holder through the blade set shaft respectively. The blade holder post penetrates and is thus fixed on the bottom wall of the container cup 6. A sealing ring 33 is installed between the blade holder and the bottom wall of the container cup to improve the sealing between the blade holder and the bottom wall of the container cup. Preferably, a plurality of sealing concentric rings are protruded and distributed on the upper and lower surfaces of the sealing ring 33 respectively, and a wave-shaped washer 31 and a pressing block 32 are sleeved on the blade holder between the bottom wall of the container cup 6 and the blade assembly fixing lock 30. The pressing block 32 is used to press the wave-shaped washer 31 and restrain the wave-shaped washer 31 from shaking around. When the blade assembly fixing lock 30 tightens the blade assembly, the pressing block 32 is pressed against the wave-shaped washer 31 and the wave-shaped washer 31 is deformed. The wave-shaped washer 31 has some elasticity, which can prevent the blade assembly from loosening and prevent shock. The assembling operation is also simple.

The blade holder post 803 penetrates and is thus fixed on the bottom wall of the container cup 6, a sealing ring 33 is installed between the blade holder 801 and the bottom wall of the container cup 6, and a plurality of sealing concentric rings 3301 are protruded and distributed on the upper and lower surfaces of the sealing ring 33 respectively.

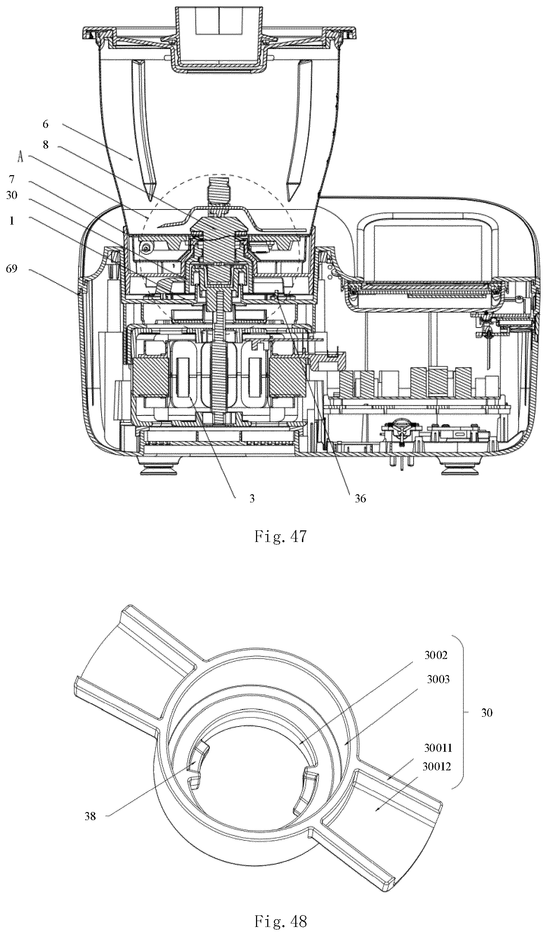

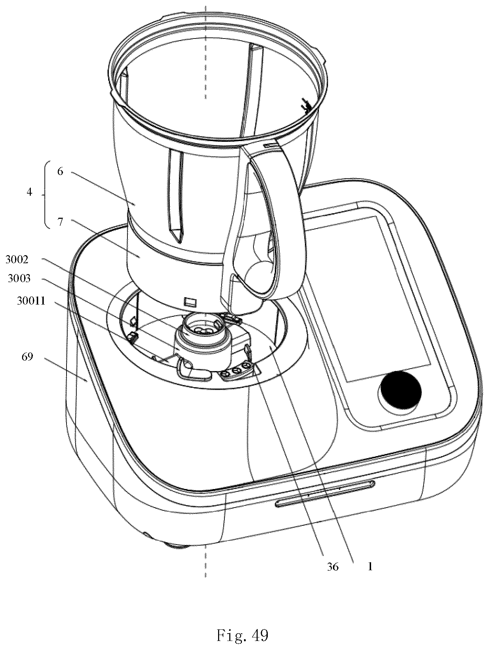

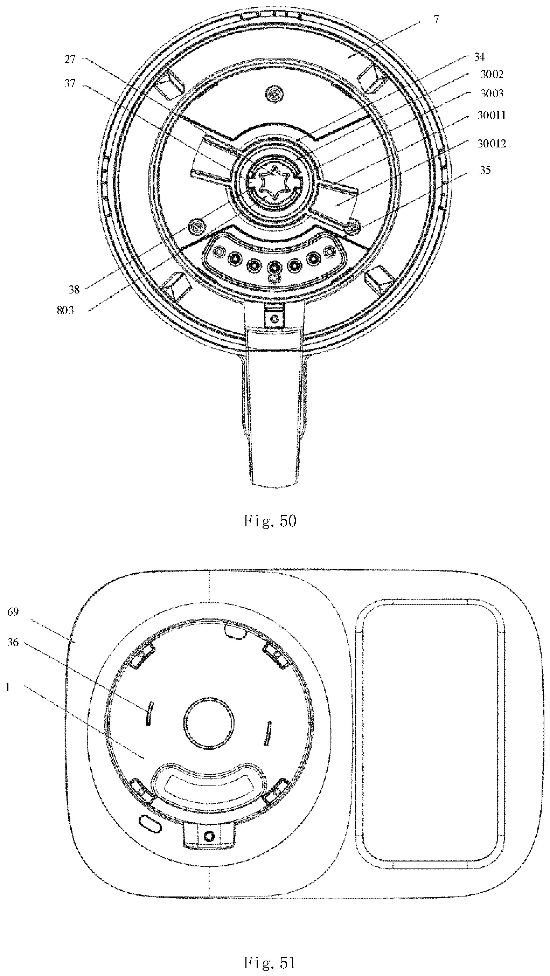

As shown in Figs. 47-52, it can be further considered in this example that a middle part of the cup holder 7 is provided with a cup holder hole 34 for the blade holder and the blade assembly fixing lock to pass through. A pair of limit ribs 35 for restricting the forward rotation of the spanner bars 3001 are also provided on the periphery of the cup holder hole 34. At least two fool-proof anti-dropping ribs 36 for restricting reverse rotation of the spanner bars 3001 are evenly fixed in the circumferential direction on the top wall of the upper cover bottom wall 102. After the assembling of the container cup assembly is completed, the fool-proof anti-dropping ribs 36 are located on the sides of the reverse rotation positions of the spanner bars to limit their reverse rotation, and further restrict the forward/reverse rotation of the blade assembly fixing lock 30 and the blade holder, which has a bidirectional anti-dropping effect.

The blade assembly fixing lock 30 can be inserted into the cup holder hole 34 from bottom to top and rotated forwardly and screwed tightly on the blade holder. A pair of limit ribs 35 are also provided on the periphery of the cup holder hole 34, on the sides of the forward rotation positions of the spanner bars 3001 for restricting their forward rotation.

In this technical solution, the container cup assembly is assembled on the mainframe upper cover 1. In this solution, the fool-proof anti-dropping ribs 36 are formed on the top wall of the upper cover bottom wall 102, and the container cup assembly 4 is assembled in the mainframe upper cover 1. The fool-proof anti-dropping ribs 36 of the mainframe upper cover 1 are on the sides of the reverse rotation positions of the spanner bars 3001. If the blade assembly fixing lock 30 is not screwed in place, when the blade assembly fixing lock 30 is loosened in the reverse direction, the fool-proof anti-dropping ribs 36 may resist the spanner bars to prevent them from falling off. In addition, if the blade assembly fixing lock is not screwed in place, when the container cup assembly 4 is to be assembled in the mainframe upper cover 1, the fool-proof anti-dropping ribs 36 on the mainframe upper cover 1 may withstand the spanner bars, so that the container cup assembly 4 cannot be placed in the bottom of the mainframe upper cover 1. The container cup assembly 4 can be placed to the bottom only when the blade assembly fixing lock 30 is screwed in place, so the fool-proof anti-dropping ribs 36 have a function in preventing foolishness. That is, only when the blade assembly fixing lock 30 and the blade holder are properly locked and screwed in place, the container cup assembly 4 can be stably assembled on the mainframe upper cover 1. At this time, the fool-proof anti-dropping ribs 36 and the spanner bars are just misaligned with each other. The purpose of setting the fool-proof anti-dropping ribs 36 is: on the one hand, it has the function of preventing falling off, and on the other hand, it has the function of preventing foolishness. The structure is simple, reliable, practical, safe, stable, and highly controllable, which can greatly reduce the chance of mechanical hazards.

**In** this solution, with the fool-proof anti-dropping ribs 36 on the mainframe upper cover 1, only when the blade assembly fixing lock 30 and the blade holder are properly locked and screwed in place, the container cup assembly 4 can be stably assembled on the mainframe upper cover 1. At this time, the fool-proof anti-dropping ribs 36 and the spanner bars are just misaligned with each other. The purpose of providing the fool-proof anti-dropping rib 36 is: on the one hand, it has the function of preventing falling off, and on the other hand, it has the function of preventing foolishness. The structure is simple, reliable, practical, safe, stable, and highly controllable, which can greatly reduce the chance of mechanical hazards.

On the top wall of the mainframe upper cover 1, there are at least two fool-proof anti-dropping ribs 36 evenly fixed along the circumferential direction, for restricting the reverse rotation of the spanner bars 3001. The fool-proof anti-dropping rib 36 is an arc-shaped rib structure extending in the circumferential direction of the mainframe upper cover 1. In assembling, the cup holder 7 is inserted into the mainframe upper cover 1 along with the container cup assembly 4, and the handle (that is, the handle shell 10) is aligned with the avoidance slot for insertion. It should be noted that the avoidance slot is opened on the side of the mainframe upper cover 1 for avoiding the lower end of the handle, and can also have a positioning function, so that the container cup assembly can only be inserted on the mainframe upper cover in one direction. At this time, the fool-proof anti-dropping ribs 36 and the spanner bars are just misaligned with each other, that is, the fool-proof anti-dropping ribs 36 are located on the sides of the reverse rotation positions of the spanner bars to limit their reverse rotation, and the spanner bars 3001 are located between the fool-proof anti-dropping ribs 36 and the limit ribs 35, further restrict the forward/reverse rotation of the blade assembly fixing lock 30 and the blade holder, achieving a two-way anti-dropping function. It should be noted that the distance between the limit rib 35 and the fool-proof and anti-dropping rib 36 is slightly larger than the width of the spanner bar 3001.

That is, the fool-proof and anti-dropping rib 36 is located on the side of the reverse rotation position of the spanner bar to restrict its reverse rotation, and the periphery of the cup holder hole 34 is also provided with a pair of limit ribs 35, which are located on the sides of the forward rotation positions of the spanner bars to restrict their forward rotation, and further restrict the forward/reverse rotation of the blade assembly fixing lock 30 and the blade holder, so as to have a two-way anti-dropping function.

Furthermore, in this example, it can also be contemplated that the blade assembly fixing lock 30 includes an upper lock sleeve 3002 and a lower lock sleeve 3003 that can be movably sleeved on the outer side of the blade holder 801 and the lower clutch 28, respectively, and the upper lock sleeve 3002 and the lower lock sleeve 3003 are coaxially arranged up and down and connected as one body. The spanner bar 3001 includes a spanner bar body extending outward along a radial direction of the blade assembly fixing lock 30 and a wrench slot 30012 opened at the lower end of the spanner bar body.

Furthermore, it can be considered in this example that the diameter of the upper lock sleeve 3002 is smaller than the diameter of the lower lock sleeve 3003, and the diameter of the upper lock sleeve 3002 is larger than the diameter of the blade holder post 803 and smaller than the diameter of the cup holder hole 34. The diameter of the lower lock sleeve 3003 is larger than the diameter of the lower clutch 28 and smaller than the diameter of the cup holder hole 34.

The blade assembly fixing lock 30 can be inserted into the cup holder hole 34 from bottom to top. The lower lock sleeve 3003 is located in the cup holder hole 34.

The blade holder includes a blade holder post 803 and a blade holder table 804 with a circular table structure formed on the blade holder post 803. The blade sets 802 and the upper clutch 27 are rotatably installed on the blade holder via a blade set shaft 805 respectively on the upper side and lower side. The central axes of the blade set shaft 805, the blade holder table 804, and the blade holder post 803 coincide with one another. The blade holder post 803 penetrates and is thus fixed on the bottom wall of the container cup 6, and the sealing ring 33 is disposed between the blade holder table 804 and the bottom wall of the container cup 6. A plurality of sealing concentric rings 301 are protruded and distributed respectively on the upper and lower surfaces of the sealing ring 33 for sealing the gap between the blade holder 804 and the sealing ring 33, and the gap between the sealing ring 33 and the container cup 6, thus improving the sealing performance.

The sealing ring 33 can have a shock-proof effect when being compressed, and the wave-shaped washer 31 also has some elasticity when being compressed, which can prevent the blade assembly 8 from loosening and can also have a shock-proof function. The assembling is simple. An assembly structure between the blade assembly fixing lock 30 (or known as a blade assembly screw lock) and the blade assembly 8 can prevent the blade assembly 8 from loosening, and can also have a shock-proof function. The assembling is simple and has high utility.

Further preferably, the screw buckle assembly includes a fixing lock screw buckle 38 (or called a locking buckle structure) and a to-be-locked member. The fixing lock screw buckle 38 is used to lock the to-be-locked member.

Further preferably, there are at least two fixing lock screw buckles 38, which are formed on the inner wall of the blade assembly fixing lock 30 and are evenly formed along the circumferential direction thereof.

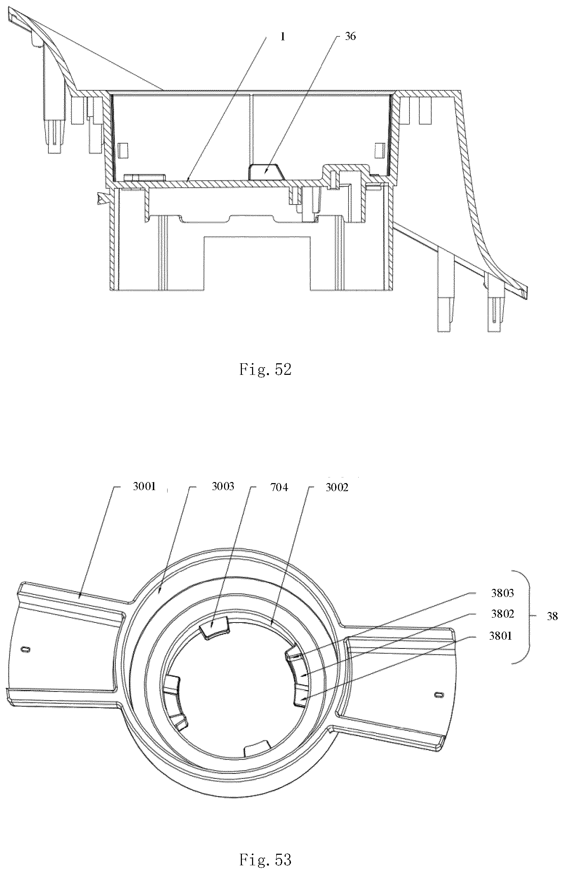

That is, the inner wall of the blade assembly fixing lock 30 is evenly formed along its circumferential direction with at least two fixing lock screw buckles 38 for locking to-be-locked members, and the locking surface of the fixing lock screw buckle 38 is L-shaped, as shown in Fig. 53, the locking surface has:
a guiding inclined surface 3801, which is an inclined surface inclined to one side, and is used to guide the to-be-locked member to be screwed into the locking surface of the fixing lock screw buckle 38;
a locking flat surface 3802, which is transitionally connected with the guiding inclined surface 3801 and extends a certain length along the circumference of the blade assembly fixing lock 30, wherein when the to-be-locked member is screwed into the locking flat surface 3802, the to-be-locked member is locked by the fixing lock screw buckle 38; and
a blocking inclined surface 3803, which is a vertical surface inclined to one side, is transitionally connected to the locking flat surface 3802, wherein when the to-be-locked member is screwed into the locking flat surface 3802, the blocking inclined surface 3803 is used to block the to-be-locked member from being screwed further in, to implement the locking by the fixing lock screw buckle 38.

Further preferably, the blade assembly fixing lock 30 includes:
a wear-resistant insert structure 70 integrally formed in the blade assembly fixing lock 30, and includes a wear-resistant insert body 701 embedded in the blade assembly fixing lock 30 and a wear-resistant ear 702 used to protect the fixing lock screw buckle 38 on the blade assembly fixing lock 30. The wear-resistant ear 702 matches the shape of the locking surface of the fixing lock screw buckle 38.

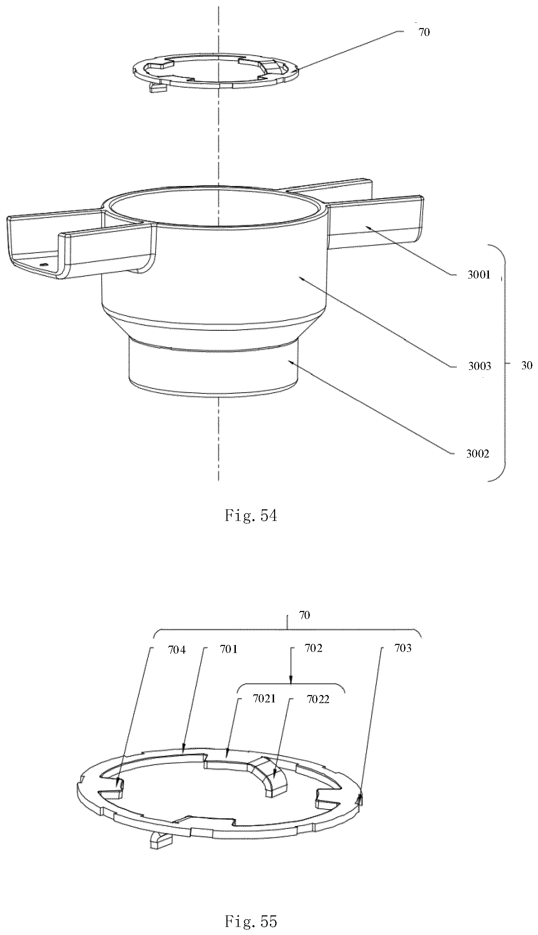

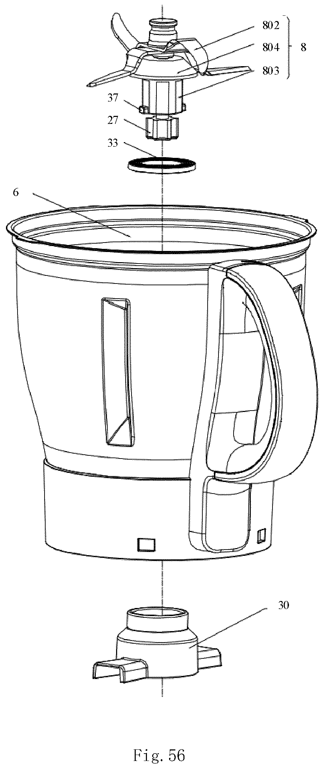

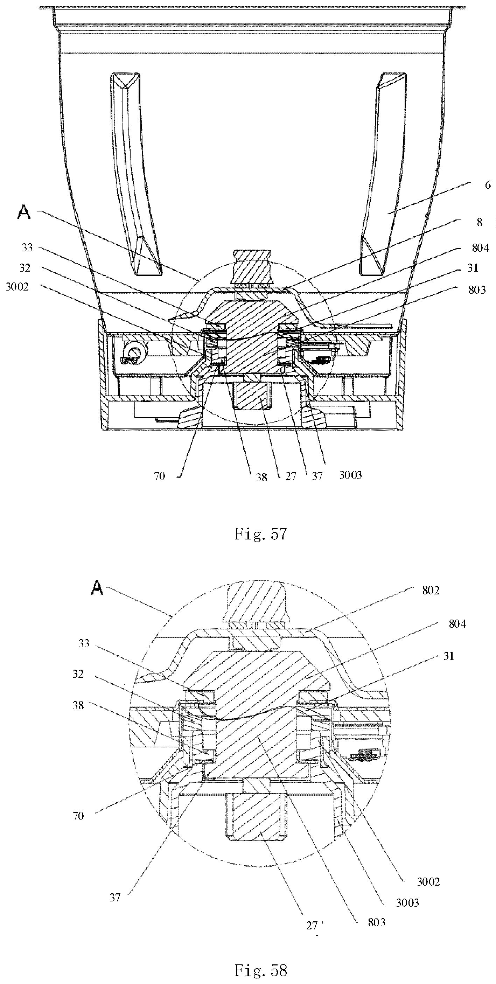

Structure and Operation: In this technical solution, as shown in Figs. 53-58, the wear-resistant insert structure 70 is preferably an integrally stamped hardware piece. During the manufacturing process of the blade assembly fixing lock 30, the wear-resistant insert structure 70 is placed in a plastic mold of the blade assembly fixing lock 30 to be molded with the blade assembly fixing lock 30, so that the wear-resistant insert structure 70 can be embedded in the blade assembly fixing lock 30 and integrated with the blade assembly fixing lock 30. This method not only can effectively reduce the weariness degree of the friction surface of the blade assembly fixing lock 30, but also can be convenient to be assembled, greatly reducing the manufacturing cost. The wear-resistant insert body 701 is embedded in the blade assembly fixing lock 30 to form an integral part, and the wear-resistant ear 702 is embedded in the locking surface of the fixing lock screw buckle 38 and matches the shape of the locking surface. When the to-be-locked member is locked in the fixing lock screw buckle 38, the wear-resistant ear 702 is located between the fixing lock screw buckle 38 and the to-be-locked member, which can greatly improve the wear resistance of the fixing lock screw buckle 38 without affecting the locking function of the fixing lock screw buckle 38.

Furthermore, in this example, it can also be contemplated that the wear-resistant insert body 701 is a closed annular sheet structure, and at least two positioning notches 703 are formed in the outer edge of the wear-resistant insert body 701. The wear-resistant insert body 701 is embedded inside the blade assembly fixing lock 30, and the positioning notches 703 can reinforce the connection between the wear-resistant insert body 701 and the blade assembly fixing lock 30, and further prevent the wear-resistant insert body 701 from moving circumferentially in the blade assembly fixing lock 30.

Furthermore, in this example, it can also be contemplated that the wear-resistant ears 702 are integrally formed on the inner edge of the wear-resistant insert body 701, and the number of the wear-resistant ears 702 is the same as the number of the fixing lock screw buckles 38 and are arranged in a one-to-one correspondence with the fixing lock screw buckles 38. The wear-resistant ear 702 includes a flat wear-resistant portion 7021 and a curved wear-resistant portion 7022. The flat wear-resistant portion 7021 and the curved wear-resistant portion 7022 are respectively embedded in the locking flat surface 3802 and the guiding inclined surface 3801. The flat wear-resistant portion 7021 and the curved wear-resistant portion 7022 are used to improve the wear resistance of the locking flat surface 3802 and the guiding inclined surface 3801, respectively. When the to-be-locked member is screwed in or out, the to-be-locked member is directly in contact with the locking flat surface 3802 and the guiding inclined surface 3801. The flat wear-resistant portion 7021 and the curved wear-resistant portion 7022 can effectively reduce the weariness degree of the friction surface of the blade assembly fixing lock 30.

Furthermore, in this example, it can also be contemplated that the inner edge of the wear-resistant insert body 701 is also integrally formed inward with at least two anti-shake protrusions 704. The anti-shake protrusions 704 and the wear-resistant ears 702 are arranged alternately, the anti-shake protrusions 704 and the flat wear-resistant portions 7021 are disposed on the same plane, and the inner edges of the anti-shake protrusions 704 and the inner edges of the flat wear-resistant portions 7021 fall on the same circumference. As shown in Fig. 53, when the wear-resistant insert structure 70 is embedded in the blade assembly fixing lock 30, the arcs where the inner edges of the anti-shake protrusions 704 and the arcs where the inner edges of the fixing lock screw buckles 38 are located are on the same cylindrical plane, and the diameter of this cylindrical plane is preferably slightly larger than the diameter of the blade holder post 803, in order not to hinder the insertion of the blade holder post 803. When the blade holder post 803 is inserted into the blade assembly fixing lock 30, the to-be-locked members on the blade holder post passes through the gap between the anti-shake protrusions 704 and the fixing lock screw buckles 38, and then the fixing lock screw buckles 38 and the to-be-locked members are locked with each other through the blade assembly fixing lock 30, thus implementing locking between the blade assembly fixing lock 30 and the blade holder post 803, with the anti-shake protrusions 704 and the fixing lock screw buckles 38 have a function in circumferential positioning of the blade holder post 803, restricting the blade holder post 83 from swinging back and forth to the left and right of the blade assembly fixing lock 30, improving the stability of the fixation of the blade assembly.

Furthermore, in this example, it can also be contemplated that the wear-resistant insert body 701 is embedded in the upper lock sleeve 3002. When the blade assembly fixing lock 30 and the blade holder post 803 are locked with each other, the wear-resistant ears 702 are located between the fixing lock screw buckles 38 and lumps 37 (or lock blocks). The wear-resistant ears 702 greatly improve the wear resistance of the fixing lock screw buckle 38 without affecting the locking function of the fixing lock screw buckle 38.

The wear-resistant insert body 701 is embedded in the upper lock sleeve 3002. When the blade assembly fixing lock 30 and the blade holder post 803 are locked with each other, the wear-resistant ears 702 are located between the fixing lock screw buckles 38 and the lumps 37. In addition, the wear-resistant ears 702 greatly improve the wear resistance of the fixing lock screw buckle 38 without affecting the locking function of the fixing lock screw buckle 38.

Further preferably, the fixing lock screw buckles 38 are evenly formed along the circumferential direction of the inner wall of the upper lock sleeve 3002 in the blade assembly fixing lock 30.

Furthermore, in this example, it can also be contemplated that the to-be-locked members are the lumps 37 evenly distributed along the outer wall of the blade holder post 803. The number of the lumps 37 is equal to the number of the fixing lock screw buckles 38, and can be screwed into the fixing lock screw buckles 38 one-to-one by rotating. The blade assembly fixing lock 30 can be inserted into the blade holder post 803 from bottom to top and rotated forward to be screwed on the blade holder post 803. At this time, the lumps 37 are screwed into the locking flat surfaces 3802 of the fixing lock screw buckles 38, and the blocking inclined surfaces 3803 block the lumps 37 to be screwed further in. At this time, the blade assembly fixing lock 30 and the blade holder post 803 are screwed in place.

That is, the screw buckle assembly includes at least two lumps 37 evenly distributed along the outer wall of the blade holder 801 in the circumferential direction, and fixing lock screw buckles 38 which evenly formed along the inner wall of the upper lock sleeve 3002 and into which the lumps 37 can be screwed one to one.

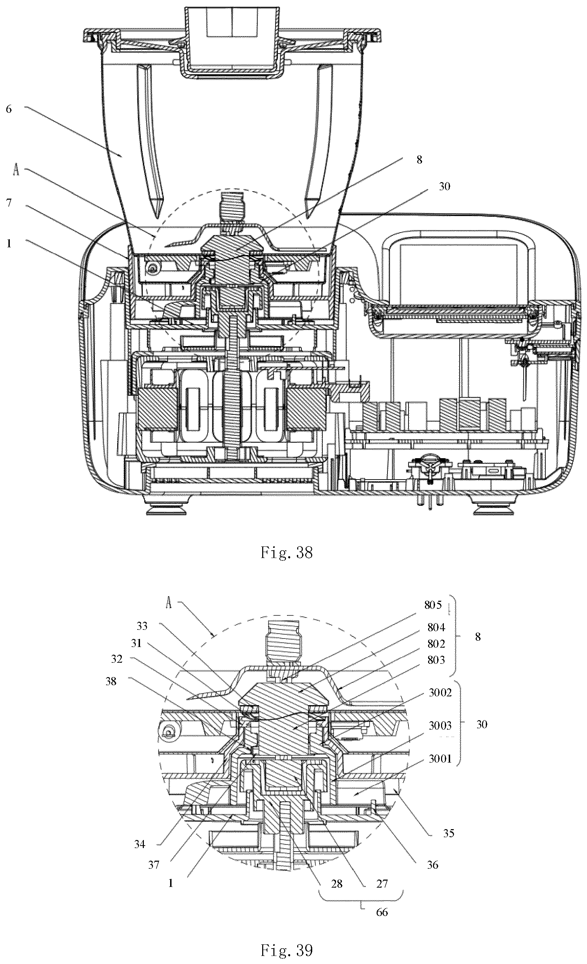

The screw buckle assembly includes at least two lumps 37 evenly distributed along the outer wall of the blade holder post 803 in the circumferential direction, and fixing lock screw buckles 38 which evenly formed along the inner wall of the upper lock sleeve 3002 and into which the lumps 37 can be screwed one to one. The fixing lock screw buckle 38 is in the shape of "¬". As shown in Fig. 38, the blade assembly fixing lock 30 can be inserted into the cup holder hole 34 from bottom to top. At this time, the upper lock sleeve 3002 and the lower lock sleeve 3003 are respectively located on the outside of the blade holder post 803 and the upper clutch 27, and by rotating the blade assembly fixing lock 30 in the forwarding direction, the fixing lock screw buckles 38 in the upper lock sleeve 3002 and the lumps 37 are screwed together one to one, functioning to fix and lock the blade assembly, so that the blade assembly fixing lock 30 and the blade holder post 803 are screwed in place. When the container cup assembly is assembled on the mainframe upper cover 1, the upper clutch 27 can be matched and inserted on the lower clutch 28, the lower lock sleeve 3003 is located on the outside of the lower clutch 28, and the limit ribs 35 and the fool-proof anti-dropping ribs 36 can respectively limit the forward/reverse rotation of the blade assembly fixing lock 30, thereby achieving stable position locking.

Further preferably, the spanner bar 3001 includes a spanner bar body extending outward in the radial direction of the blade assembly fixing lock 30, and a wrench slot 30012 opened at the lower end of the spanner bar body.

The spanner bar 3001 includes a spanner bar body extending outward in the radial direction of the blade assembly fixing lock 30, and a spanner slot 30012 opened at the lower end of the spanner bar body. The cross section of the spanner bar body is in a "Π" shape. The end of the spanner bar body away from the blade assembly fixing lock is open, the end of the wrench slot 30012 away from the blade assembly fixing lock is open, and the lower surface of the spanner bar body is flush with the lower surface of the blade assembly fixing lock. When the blade assembly fixing lock 30 and the blade holder are properly locked and screwed in place, the container cup assembly 4 is stably assembled on the mainframe upper cover 1, and the fool-proof anti-dropping ribs 36 and the spanner bars body 30011 are just staggered with each other. When the blade assembly fixing lock is not screwed in place, when the container cup assembly 4 is assembled in the mainframe upper cover 1, the fool-proof anti-dropping ribs 36 on the mainframe upper cover 1 will bear against the spanner bars 3001, so that the container cup assembly 4 cannot be put in place on the mainframe upper cover, which can prevent foolishness.

Furthermore, in this example, it can also be contemplated that the fool-proof anti-dropping rib 36 is an arc rib structure extending along the circumferential direction of the mainframe upper cover 1. When the container cup assembly 4 is properly assembled on the mainframe upper cover 1, the spanner bar bodies 30011 are located between the fool-proof anti-dropping ribs 36 and the limit ribs 35, which can respectively limit the forward/reverse rotation of the blade assembly fixing lock 30. The distance between the limit rib 35 and the fool-proof anti-dropping rib 36 in space is slightly larger than the width of the spanner bar body 30011.

Further preferably, the wave-shaped washer is a soft rubber washer with a certain elasticity, on which wave crests and wave troughs are alternately arranged, and the pressing block is a PPS ring-shaped structure to limit the shaking of the wave-shaped washer along the circumferential direction. With high strength and high temperature resistance, it is used to limit the shaking of the wave-shaped washer 31 along the circumferential direction.

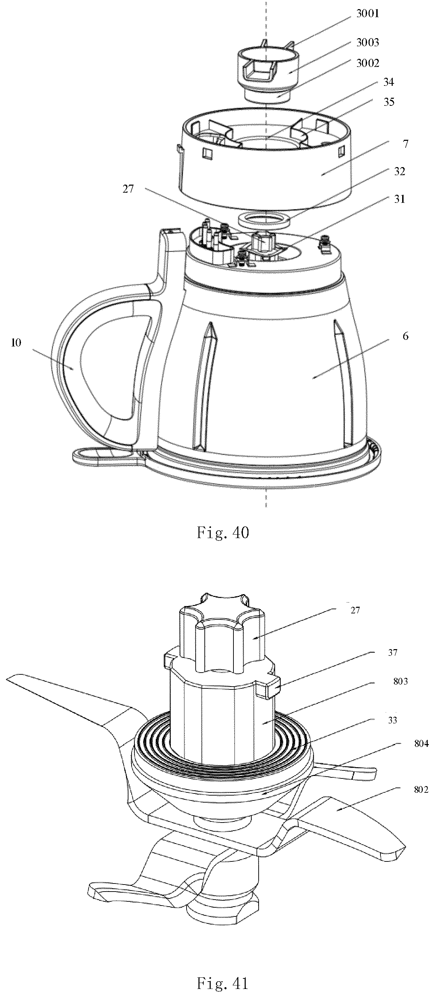

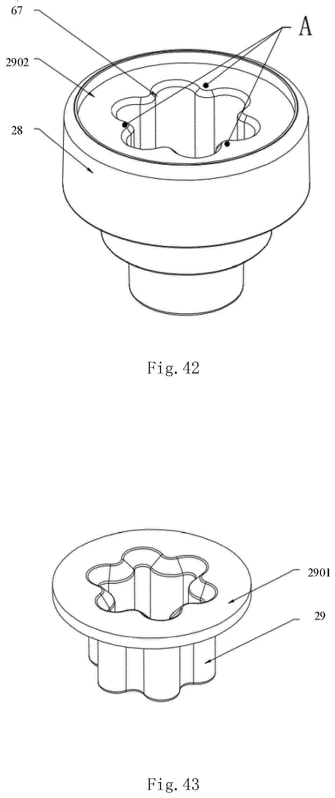

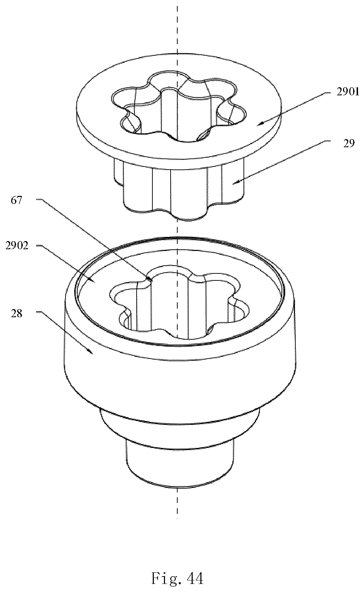

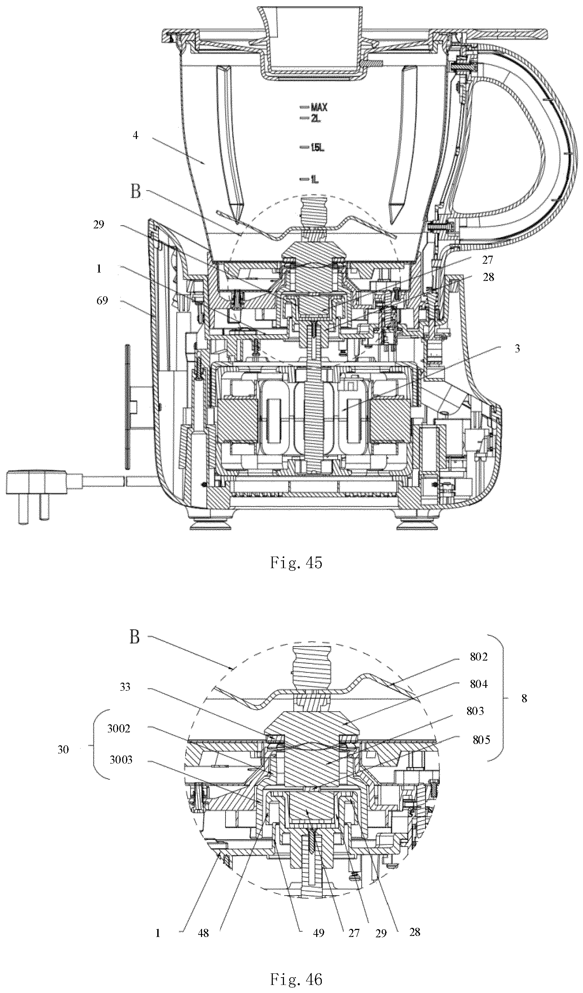

As shown in Figs. 41-46, it is further preferred that the blade assembly fixing structure further includes:
a shock-proof pad 68 including a hollow washer 29 that is matched and clamped between the upper clutch and the star-shaped cylindrical slot.

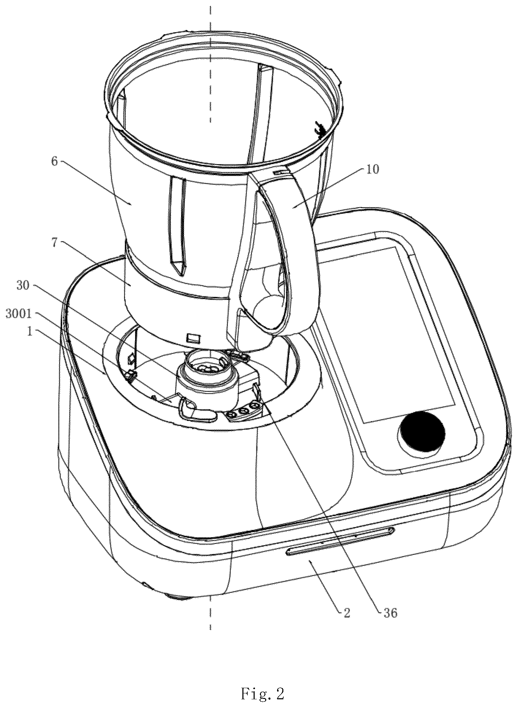

Structure and Operation: In this technical solution, the blade sets 802 and the upper clutch 27 are respectively installed on the upper and lower sides of the blade holder through the blade set shaft 805, and the lower clutch 28 is installed on the motor shaft of the motor. In assembling, the hollow washer 29 is inserted into the star-shaped cylindrical slot 67, and then the upper clutch 27 is inserted into the hollow washer 29 of the shock-proof pad, so that the power transmission connection between the upper and lower clutches has a soft rubber buffer, which can greatly reduce the noise and vibration of the whole machine during high-speed stirring, and provide a better user experience. In addition, the upper clutch 27 has a star-shaped cylindrical structure with even-numbered sides, and the star-shaped cylindrical slot 67 is also a star-shaped cylindrical structure with even-numbered sides, preferably a hexagram cylindrical structure. The upper clutch 27 and the star-shaped cylindrical slot 67 are designed into an even-numbered star-shaped structure. The glue feeding points on the mold can be designed to be evenly distributed. As shown in Fig. 2, when the upper clutch 27, the star-shaped cylindrical slot 67 is a hexagram cylindrical structure, the lower clutch 28 can be designed with three equally spaced glue feeding points A, so that the size is stable and the concentricity is high during injection molding, which can further effectively reduce the vibration and noise generated by the blade holder.

Further preferably, the shock-proof pad 68 is a silica gel shock-proof pad, which can provide soft rubber buffer, and help to reduce the noise and vibration of the whole machine.

Furthermore, in this example, it can also be contemplated that the hollow washer 29 is a hexagram cylindrical structure with six arc protrusions distributed along the circumferential direction, and the upper edge of the hollow washer 29 extends outward to form a ring of washer outer edge 2901, the upper surface of the lower clutch 28 is recessed downward to form an outer edge slot 2902 into which the washer outer edge 2901 is inserted. When the upper clutch 27 and the lower clutch 28 are assembled, the hollow washer 29 is inserted into the star-shaped cylindrical slot 67, the hollow washer 29 and the star-shaped cylindrical slot 67 are matched to each other, and then the upper clutch 27 is inserted into the hollow washer 29 of the shock-proof pad. the upper clutch 27, the hollow washer 29, and the star-shaped cylindrical slot 67 are matched and fit with each other. The assembly has high stability and high concentricity, which helps to reduce the noise and vibration of the whole machine.

In usage of the kitchen appliance, the container cup assembly 4 is assembled on the mainframe upper cover 1. At this time, the upper clutch 27 is inserted into the hollow washer 29 of the shock-proof pad, and the upper clutch 27, the hollow washer 29 and the star-shaped cylindrical slot 67 are matched and fit with each other, implementing the power transmission connection among the blade set 802, the blade set shaft 805, the upper clutch, the lower clutch, and the motor, so that the power transmission connection between the upper and lower clutches has a soft rubber buffer, which can greatly reduce the noise and vibration of the whole machine during high-speed stirring, and provide a better user experience.

Further preferably, the mainframe upper cover 1 is formed by recessing the upper surface of the mainframe housing for the container cup assembly 4 to be assembled.

### Example 6

Example 6 of the present disclosure is further improved on the basis of Example 1/2/3/4/5, so as to fully exhibit the technical advantages of the present disclosure, which will be exemplified below.

For example, at least three shock-proof structures are evenly distributed on the outer circumference of the top wall of the upper cover bottom wall 102, and the shock-proof structure includes a shock-proof pad structure 39 and a shock-proof seat structure 40.

The shock-proof pad structure 39 includes an arch-shaped shock-proof pad body 3901 and a shock-proof pad support rod 3902 which are formed integrally. The shock-proof pad support rod 3902 is provided with a limit step 3903, the upper middle part of the arch-shaped shock-proof pad body 3901 protrudes upward to form an elastic protrusion, and the lower middle part of the arch-shaped shock-proof pad body 3901 recesses upward to form a recessed space. The surface of the arch-shaped shock-proof pad body 3901 is in an arc transition shape.

The shock-proof seat structure 40 is integrally formed on the inner surface of the mainframe upper cover, and includes a shock-proof seat body for receiving the arch-shaped shock-proof pad body and a limit hole for inserting the shock-proof pad support rod.

In this technical solution, when the shock-proof pad structure 39 is assembled with the shock-proof seat structure 40, the shock-proof pad support rod 3902 is matched and inserted into the limit hole, and the limit step 3903 is stuck under the limit hole, so that the shock-proof pad structure 39 cannot be displaced in the vertical direction. The arch-shaped shock-proof pad body 3901 is matched and installed in the shock-proof seat body, so that the shock-proof pad structure cannot be displaced in the horizontal direction. At this time, the upper part of the arch shock-proof pad body 3901 is exposed above the shock-proof seat body. When the container cup assembly 4 is placed in the mainframe upper cover 1, the bottom edge of the container cup assembly 4 contacts and presses the upper end of the arch-shaped shock-proof pad body 3901. Preferably, the arch-shaped shock-proof pad body 3901 is made of soft rubber. The arch-shaped shock-proof pad body 3901 is designed into an arch shape, which can bear weight and undergo certain elastic deformation, that is, it can be compressed and rebound, which can effectively reduce vibration. In this example, a plurality of arch-shaped shock-proof pad bodies 3901 made of soft rubber can be provided between the mainframe cover and the container cup assembly, to avoid direct contact between hard rubbers, having a cushioning and shock-absorbing effect. The noise and vibration of the whole machine can be greatly reduced during high-speed stirring, providing a better user experience.

### Example 7

Example 7 of the present disclosure is further improved on the basis of Example 1/2/3/4/5/6, so as to fully exhibit the technical advantages of the present disclosure, which will be exemplified below.

For example, the motor 3 is fixed in the mainframe housing through a motor fixing structure, and the motor fixing structure includes an upper shock-proof structure and a lower shock-proof structure respectively installed on the upper and lower parts of the motor to prevent longitudinal displacement and vibration of the motor, and peripheral shock-proof structures evenly distributed on the periphery of the motor to prevent lateral displacement and vibration of the motor. The upper shock-proof structure is disposed between the upper cover bottom wall 102 and the motor 3, and is a shock-proof rubber sleeve 41, which includes a shock-proof surface of a cylindrical structure, and a shock-proof ring formed on the upper end of the shock-proof surface and extending inward. The lower shock-proof structure is a shock-proof washer 42, and a peripheral rib 43 for supporting and positioning the lower shock-proof structure is formed on the mainframe base 2. At least four to eight vertically arranged sleeve columns 44 are arranged on the periphery of the peripheral rib 43 at equal intervals. The peripheral shock-proof structures include shock-proof sleeves 45 sleeved on the sleeve columns 44 in one-to-one correspondence, and the outer walls of the shock-proof sleeves 45 are protruded with protruding strips that closely fit with the motor.

In this technical solution, the motor 3 is installed between the mainframe upper cover 1 and the mainframe base 2. On the one hand, the upper part of the motor 3 is fixed by installing a circle of the upper shock-proof structure between the mainframe upper cover 1 and the motor 3, so as to solve the problem that the motor 3 and the mainframe upper cover 1 are not concentric, and thus reduce the noise. The motor 3 can have a function of shock absorption, fixation and center positioning. On the other hand, a lower shock-proof structure is installed between the motor 3 and the mainframe base 2 to support the motor to eliminate vibration. The upper shock-proof structure and the lower shock-proof structure arranged opposite to each other not only can prevent the longitudinal displacement and vibration of the motor, but also can have a function of central positioning. Also, the motor 3 are provided with an evenly distributed peripheral shock-proof structures, the peripheral shock-proof structures are used to assist the concentric positioning of the bottom of the motor and assist in preventing the motor from impacting the mainframe upper cover when falling occurs, and can effectively prevent the motor from lateral displacement and vibration. In the technical solution, the upper shock-proof structure, the lower shock-proof structure, and the peripheral shock-proof structures are fit together in an assembly, which can not only have a central positioning function for the motor 3 and reduces noise, but also can prevent the motor from horizontal and vertical displacement and vibration.

It should be noted that the upper shock-proof structure, the lower shock-proof structure, and the peripheral shock-proof structures can be made of but not limited to rubber materials, which can have a good shock-proof and noise-proof effect. When falling occurs, the upper shock-proof structure and the lower shock-proof structure, and the peripheral shock-proof structures can greatly reduce the impact of the motor on the mainframe upper cover, the mainframe base and the surrounding structure of the mainframe, and improve the service life of the whole machine.

### Example 8

The example 8 of the present disclosure is further improved on the basis of the example 1/2/3/4/5/6/7, so as to fully exhibit the technical advantages of the present disclosure, which will be exemplified below.

For example: the mainframe upper cover 1 is also provided with an overflow structure, and the overflow structure includes a mainframe-upper-cover drainage structure and an interference drainage structure.

The mainframe-upper-cover drainage structure includes at least one side drainage hole 46 opened at the edge of the upper cover bottom wall 102, and a first water receiving part for transferring liquid in the side drainage hole 46.

The interference drainage structure includes a water receiving tray 47 for receiving liquid overflowing from the gap between the lower clutch 28 and the upper cover bottom wall 102, and a second water receiving component for transferring liquid in the water receiving tray.

In this technical solution, when a user accidentally pours water into the mainframe upper cover 1 or forgets to install the blade holder into the container cup assembly before pouring water therein, it tends to cause a large area of the mainframe housing to soak in water, and the accumulated water will pass through the gap between the lower clutch and the mainframe upper cover, entering the motor 3 and causing the motor 3 to fail or other safety problems. The overflow structure includes a mainframe-upper-cover drainage structure and an interference drainage structure. The two drainage means can both function to effectively prevent the mainframe from flooding in a large area. Wherein the mainframe-upper-cover drainage structure includes at least one side drainage hole 46 opened at the edge of the mainframe upper cover 1, and a first water receiving part for transferring liquid in the side drainage hole 46, so that the water above the mainframe upper cover 1 can be quickly drained through the side drainage hole 46 and the first water receiving part so as to prevent the mainframe from being flooded in a large area. The interference drainage structure includes a water receiving tray 47 for receiving liquid overflow from the gap between the lower clutch 28 and the upper cover bottom wall 102 and a second water receiving part used to transfer the liquid in the water receiving tray 47. When the water accumulates above the mainframe upper cover 1, the water inevitably overflows from the gap between the lower clutch and the mainframe upper cover to the motor. It tends to cause water to enter the motor. By providing a water receiving tray 47 between the mainframe upper cover 1 and the motor 3, water can be introduced to an area outside the motor through the second water receiving part to prevent the motor from soaking in water.

Furthermore, in this example, it can also be contemplated that the upper cover bottom wall 102 is provided with a motor hole for partially inserting the lower clutch 28, and at least one circle of water retaining ring 48 is formed downward on the outer side of the lower clutch 28. A circle of water retaining wall 49 extends upward from the edge of the motor hole, and the upper end of the water retaining wall 49 extends into the water retaining ring 48. Flow paths for the liquid flowing down from the gap between the lower clutch and the mainframe upper cover 1 can be created as much as possible, and then the amount of water overflow can be reduced as much as possible, and the drainage burden of the water receiving tray 47 can be reduced.

When water accumulates on the mainframe upper cover 1, the staggered water retaining wall 49 and the water retaining ring 48 can increase the flow paths of the liquid in the gap between the lower clutch 28 and the mainframe upper cover 1 as much as possible, thereby reducing amount of water overflow in the motor hole as much as possible. This can reduce the drainage burden of the drainage tray under the motor hole, and there are gaps between the water retaining wall 49 and the water retaining ring 48, and the water retaining ring 48 and the lower clutch 28, which can prevent overflow and will not hinder the rotation of lower clutch on the motor hole.

Furthermore, in this example, it can also be contemplated that the first water receiving part includes a base drainage pipe 50 vertically installed on the mainframe base 2, and a water receiving pipe 51 inserted into the upper end of the base drainage pipe 50. The lower end of the side drainage hole 46 is tightly connected with the open end of the water receiving pipe 51 through a transfer structure. The base drain cylinder 50 penetrates the base of the mainframe, and the water discharged through the side drainage hole 46 is discharged from the base of the mainframe through the transfer structure, the water pipe 51, and the base drain cylinder 50 in sequence, so that the water above the mainframe upper cover 1 can be quickly drained. Prevent the mainframe from flooding in a large area.

It should be noted that the transfer structure may, but is not limited to, include an inclined transfer bottom surface formed by bending at least once along one side edge of the side drainage hole 46, and a connecting surface connected between the transfer bottom surface and other edge of the drainage hole. The transfer bottom surface is inclined, so that the water above the mainframe upper cover 1 can quickly flow into the water receiving pipe 51.

Furthermore, in this example, it can also be contemplated that the water receiving tray 47 is located between the upper cover base 102 and the motor 3. The water receiving tray 47 includes a receiving tray surface 4701 and an outer tray wall 4702 extending upward along the edge of the receiving tray surface 4701. One side of the outer tray wall 4702 is formed with a water receiving notch 4703, and a water guiding lip 4704 extends downward from the edge of the receiving tray surface below the water receiving notch 4703. The receiving tray surface 4701 is provided with a tray hole through which the motor shaft of the electric motor passes, and a circle of inner tray wall 4705 extends upward from the edge of the tray hole. The liquid overflowing from the gap between the lower clutch 28 and the mainframe upper cover 1 falls onto the receiving tray surface 4701 under the action of gravity, flows down to the second water receiving part through the water receiving notch 4703, and is drained through the second water receiving part, so as to prevent water from entering the motor, wherein the edge of the receiving tray surface 4701 under the water receiving notch 4703 extends downward with the water guiding lip 4704 which functions to guide water flow.

Furthermore, in this example, it can also be contemplated that the second water receiving part includes a base drainage pipe 50 vertically installed on the mainframe base 2 and a drainage gap 52. The drainage gap 52 is in the shape of a circular column and located between the weighing foot assembly 5 and a via hole 59 for a suction disc foot, so that water on the mainframe base 2 can be drained through the drainage gap 52, to avoid the problem that the liquid in the mainframe base 2 cannot be discharged, preventing water from entering the motor. Thus, a variety of drainage means have been adopted to improve safety.

### Example 9

The example 9 of the present disclosure is further improved on the basis of the example 1/2/3/4/5/6/7/8, so as to fully exhibit the technical advantages of the present disclosure, which will be exemplified below.

For example, the weighing foot assembly 5 includes a cantilever beam assembly 53, an upper steel plate 54 and a weighing sensor bracket 55 respectively arranged on and below the cantilever beam assembly 53, and a suction disc foot bracket 56 inserted below the weighing sensor bracket 55. A reset ring 57 for reducing lateral vibration and displacement on the circumference is provided between the weighing sensor bracket 55 and the suction disc foot bracket 56, and a suction disc foot 58 for reducing longitudinal vibration and lateral displacement is provided at the lower end of the suction disc foot bracket 56.

The stirring-type cooking appliance further includes a shock-proof and displacement-proof structure of the weighing foot.

The shock-proof and displacement-proof structure of the weighing foot includes a reset ring 57 for reducing lateral vibration and displacement on the circumference and provided between the weighing sensor bracket 55 and the suction disc foot bracket 56, and a suction disc foot 58 for reducing longitudinal vibration and lateral displacement and provided at the lower end of the suction disc foot bracket 56.

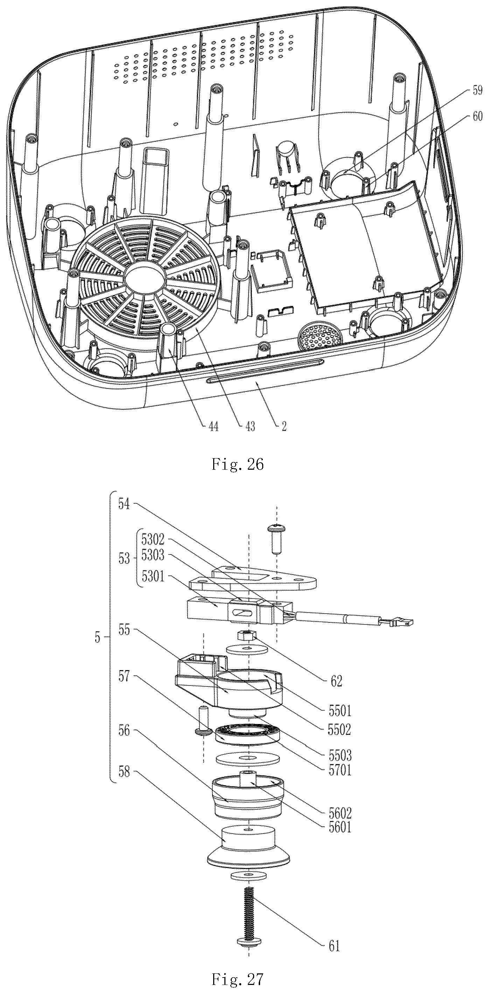

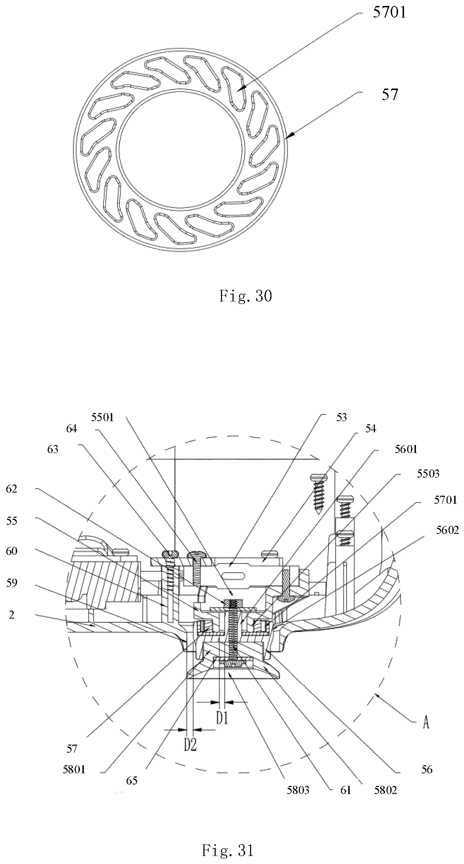

Structure and Operation: In this technical solution, as shown in Figs. 27 and 30, the cantilever beam assembly 53 is fixed between the upper steel plate 54 and the weighing sensor bracket 55, and the cantilever beam assembly 53 is used to sense weight, and the upper steel plate 54 and the weighing sensor bracket 55 clamps and fixes the cantilever beam assembly 53 stably between the two. The suction disc foot bracket 56 is inserted below the weighing sensor bracket 55. Taking a product of a stir-frying machine / kneader as an example, in the stir-frying / kneading mode, when flour and water are mixed into dough, the vibration and torsion generated by the eccentric movement of the dough in the cup are very large, causing vibration and displacement of the suction disc foot 58, which is likely to cause serious accidents. For this reason, in the present disclosure, the weighing foot assembly is equipped with a shock-proof and displacement-proof structure. The shock-proof and displacement-proof structure includes a reset ring 57 for reducing lateral vibration and displacement on the circumference between the weighing sensor bracket 55 and the suction disc foot bracket 56. The reset ring 57 can be but not limited to a silicone ring structure. Because the reset ring is provided with a hollow shock-absorbing hole 5701, the shock-absorbing hole 5701 will become smaller when it is pressed by force. This process is a buffer, which can absorb vibration and torsion, and act like a sponge. The weighing sensor bracket 55 can make a certain degree of lateral movement on the circumference on the suction disc foot bracket 56. When the reset ring 57 is pressed and deformed by the weighing sensor bracket 55, the reset ring 57 can absorb the lateral vibration and remove a part of the lateral torsion. When the reset ring 57 is reset, it can also absorb lateral vibration and lateral torsion, which can reduce the lateral vibration and displacement, and prepare for the next extrusion deformation. The shock-proof and displacement-proof structure also includes a suction disc foot 58 for reducing longitudinal vibration and lateral displacement provided at the lower end of the suction disc foot bracket 56. The suction disc foot 58 can be made of but not limited to silicone material. On the one hand, when the kitchen appliance is placed on the table top, the air in the suction disc foot 58 can be pressed out. As a result, the air pressure inside the suction disc foot 58 is lower than the air pressure outside the suction disc foot, and the suction disc foot 58 is less likely to be pulled up. Therefore, the longitudinal vibration and displacement generated during cooking/kneading will less likely to pull up the suction disc foot 58, which reduces the vibration and displacement of the kitchen appliance, and improve the stability of the machine. On the other hand, the suction disc foot 58 has a certain height and a certain elasticity, which can not only help the kitchen appliance to absorb the shock and fixation, but also facilitate heat dissipation of the parts above the base. In the present disclosure, both the reset ring 57 and the suction disc foot 58 are installed in the weighing foot assembly to further reduce the horizontal and vertical vibration and displacement of the machine.

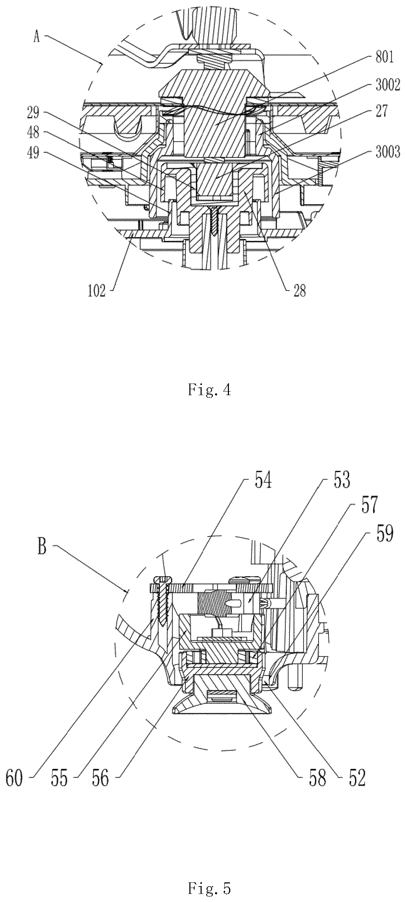

Furthermore, in this example, it can also be contemplated that the installation position includes a via hole 59 for the suction disc foot which penetrates the mainframe base 2 and through which the suction disc foot bracket 56 is suspended and inserted, and screw posts 60 respectively fixed to the periphery of the via hole 59 for the suction disc foot. The upper steel plate 54 and the screw posts 60 are connected by a self-tapping screw 63. As shown in Fig. 4, the integrated weighing foot assembly 5 is inserted into the via hole 59 for the suction disc foot. The upper steel plate 54 and the screw posts 60 are connected by a self-tapping screw 63 to implement the fixation between the upper steel plate 54 and the screw posts 60.

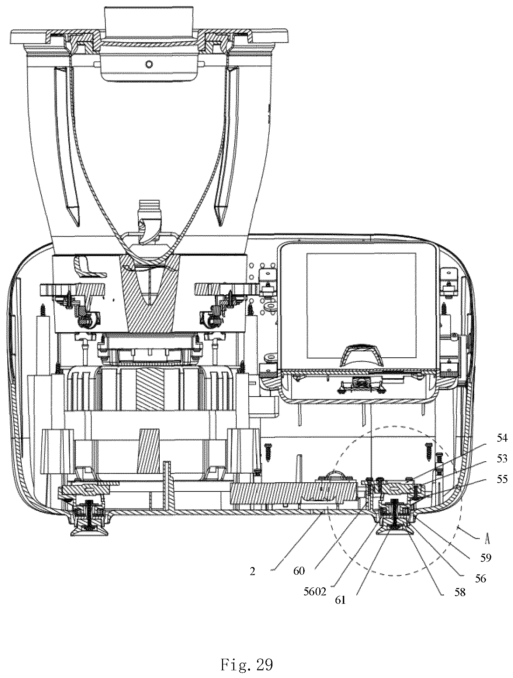

Structure and Operation: In this technical solution, each corner end of the base 2 is provided with the installation position for assembling the weighing foot assembly 5. Preferably, the number of the installation positions and the number of the weighing foot assemblies 5 is at least four. Each of the installation positions can be installed with one weighing foot assembly, and a plurality of weighing foot assemblies are distributed at the corner ends of the base 2, which can help to improve the accuracy of weighing. The cantilever beam assembly 53 in the weighing foot assembly is configured to sense the weight of the kitchen appliance and can show change in weight during the cooking process. The installation position includes a via hole 59 for the suction disc foot, the via hole 59 penetrating the mainframe base 2 through which the suction disc foot bracket 56 is suspended and inserted, and screw posts 60 respectively fixed to the periphery of the via hole 59 for the suction disc foot. As shown in Figs. 29, 31, 32, the integrated weighing foot assembly 5 is inserted into the via hole 59 for the suction disc foot. The upper steel plate 54 and the screw posts 60 are connected by a self-tapping screw 63 to implement the fixation between the upper steel plate 54 and the screw posts 60. The weighing foot assembly includes a cantilever beam assembly 53, an upper steel plate 54 and a weighing sensor bracket 55 respectively arranged above and below the cantilever beam assembly 53, and a suction disc foot bracket 56 inserted below the weighing sensor bracket 55, and a shock-proof and displacement-proof structure provided in the weighing foot assembly. The cantilever beam assembly 53 is configured to sense the weight. When the kitchen appliance is placed on the top of a table, the air in the suction disc foot 58 is pressed out, causing the air pressure inside the suction disc foot 58 to be lower than the air pressure outside the suction disc foot, and the suction disc foot 58 is less likely to be pulled up, so the vertical vibration and displacement generated during cooking/kneading will less likely to pull up the suction disc foot 58, which reduces the vibration and displacement of the kitchen appliance, and improve the stability of the machine. On the other hand, the suction disc foot 58 has a certain height and a certain elasticity, which can not only help the kitchen appliance to absorb the shock and fixation, but also facilitate heat dissipation of the parts above the base. When the stirring assembly in the kitchen appliance moves eccentrically, the weighing sensor bracket 55 can make a certain degree of lateral movement on the suction disc foot bracket 56. When the reset ring 57 is squeezed and deformed by the weighing sensor bracket 55, the reset ring 57 can absorb the vibration generated in the lateral direction and release a part of the lateral torsion force. When the reset ring 57 is reset, the reset ring 57 can also absorb lateral vibration and lateral torsion, thus reducing lateral vibration and displacement, and preparing for the next extrusion deformation. In general, the weighing foot assembly is suspended and installed in the via hole 59 for the suction disc foot through the upper steel plate 54 and the screw posts 60. Other parts of the weighing foot assembly cannot contact the via hole 59 for the suction disc foot. When the stirring assembly in the kitchen appliance performs eccentric movement, huge vibration will be generated, by installing both the reset ring 57 and the suction disc foot 58 in the weighing foot assembly, it can help to further reduce the horizontal and vertical vibration and displacement of the machine. Moreover, due to the other parts of the weighing foot assembly cannot be in contact with the via hole 59 for the suction disc foot, it can further ensure the accuracy of weighing.

In this technical solution, as shown in Figs. 3-4 and 25-27, the cantilever beam assembly 53 is fixed between the upper steel plate 54 and the weighing sensor bracket 55. The cantilever beam assembly 53 is configured to sense weight and can show change in weight during the cooking process. The upper steel plate 54 and the weighing sensor bracket 55 stably clamp and fix the cantilever beam assembly 53 between there, and the suction disc foot bracket 56 is inserted below the weighing sensor bracket 55. Taking a product of a stir-frying machine / kneader as an example, in the stir-frying / kneading mode, when flour and water are mixed into dough, the vibration and torsion generated by the eccentric movement of the dough in the cup are very large, causing vibration and displacement of the suction disc foot 58, which is likely to cause serious accidents. For this reason, a reset ring 57 is installed between the weighing sensor bracket 55 and the suction disc foot bracket 56. The weighing sensor bracket 55 can make a certain degree of lateral movement on the circumference on the suction disc foot bracket 56. When the reset ring 57 is pressed and deformed by the weighing sensor bracket 55, the reset ring 57 can absorb the lateral vibration and remove a part of the lateral torsion. When the reset ring 57 is reset, it can also absorb lateral vibration and lateral torsion, which can reduce the lateral vibration and displacement, and prepare for the next extrusion deformation. In addition, when the weighing foot assembly is assembled, the suction disc foot bracket 56 is suspended and inserted through the via hole 59 for the suction disc foot. When the blade assembly inside the cooking appliance moves eccentrically, the weighing foot assembly 5 moves around without contacting the via hole 59 for the suction disc foot. Even if the cooking machine is full of food on an inclined top of the table, the weighing foot assembly 5 cannot contact the via hole 59 for the suction disc foot, which can ensure the accuracy of weighing.

Furthermore, in this example, it can also be contemplated that the cantilever beam assembly 53 includes a cantilever beam 5301, an outlet end 5302 extending outwardly from one side of the cantilever beam, and patches 5303 protruding and disposed respectively on the upper and lower ends of the cantilever beam 5301.

A weighing foot lead is output from the outlet end 5302, and the cantilever beam 5301 on both sides of the patches 5303 are respectively provided with a first threaded hole 53011 and a second threaded hole 53012.

It should be noted that the patches can firmly attach a strain gauge with weak current change to the elastic body (cantilever beam), so that strain the gauge can be deformed along with the elastic body, so as to achieve an effect of weak current change. The patch can be, but is not limited to, a weighing sensor of model LH-3505-001. The force receiving surface of the cantilever beam 5301 is provided as a small plane, which can increase the sensing accuracy. Since the cantilever beam 5301 has an empty area above and below it, when the weighing beam cantilever beam 5301 is subjected to external force, the cantilever beam 5301 will deform. For the weighing sensor, under the action of the external force, the elastic body of the component of the weighing sensor is deformed, so that the strain gauge attached to the elastic body inside the weighing sensor is bent under force, resulting in a change in the resistance value of the strain gauge, and the change in resistance value causes a weak current change. After being amplified by an external circuit board and converted by related software, the weak current change can show the weight. The food in the container cup can be regarded as the external force, and the weighing sensor converts the external force into an electrical signal.

It should also be noted that there is also a weighing plate (not shown in the Figures) on the mainframe base, the outlet ends 5302 of the cantilever beam 5301 are respectively connected to the weighing plate, and the lead of the weighing foot is electrically connected to the weighing sensor. The model of the weighing plate can be but not limited to CMCZ 05. It needs to be further pointed out that the structure of the weighing plate is not the main technological innovation of this technical solution, so weighing plates available on the market are applicable. The structure of the weighing plate is existing technology, and will not be elaborated in the present disclosure. The relevant information on the internal structure of the weighing plate could be readily obtained from a product on sale or search on the web, without paying creative labor by those skilled in the art.

Furthermore, in this example, it can also be contemplated that the weighing sensor bracket 55 has a cylindrical structure. The upper part of the weighing sensor bracket 55 is recessed with a weighing avoidance slot 5501 for avoiding the lower end of the position of the patch of the cantilever beam assembly 53, and one side of the upper part also extends outwardly with a fitting slot 5502 that matches one end of the cantilever beam assembly. A first hollow positioning post 5503 is formed protruding downward from the lower part of the weighing sensor bracket 55. The weighing sensor bracket 55 is designed as an integrated structure, which is simple in structure and easy to assemble, which can reduce tolerance in multiple times of assembly.

Instead of connecting with the cantilever beam 5301 through an intermediate adapter plate in the prior art, the weighing sensor bracket 55 is directly fixed on the cantilever beam 5301.

Furthermore, in this example, it can also be contemplated that the reset ring 57 has a ring-shaped cylindrical structure, the reset ring 57 is sleeved on the outside of the first hollow positioning post 5503, and the reset ring 57 is provided with a plurality of shock-absorbing holes 5701 penetrating the reset ring 57 and uniformly arranged in a circular array, and the shock-absorbing holes 5701 are arranged obliquely toward the circumferential direction of the reset ring 57. The purpose of providing the shock-absorbing holes 5701 on the reset ring 57 lies in that when the reset ring 57 is pressed and deformed by the weighing sensor bracket, the shock-absorbing holes 5701 can absorb the lateral vibration and remove a part of the lateral torsion; and when the reset ring 57 is reset, the shock-absorbing holes 5701 can also absorb lateral vibration and lateral torsion, which can reduce the lateral vibration and displacement, and prepare for the next squeeze deformation.

Furthermore, in this example, it can also be contemplated that the upper steel plate 54 is provided with a first fixing hole, the position of the first fixing hole corresponding to the position of the first threaded hole 53011, and the fitting slot 5502 is provided with a second fixing hole, the position of the second fixing hole corresponding to the position of the second threaded hole 53012. The first fixing hole and the first threaded hole 53011 and the second fixing hole and the second threaded hole 53012 are connected by tooth screws 64, so as to implement fixation the positions of the upper steel plate 54, the cantilever beam assembly 53, and the weighing sensor bracket 55. It should be noted that the upper steel plate 54 has a V-shaped structure, and a gap for avoiding the position of the patch 5303 at the upper end of the cantilever beam assembly 53 is formed therethrough.

Furthermore, it can be considered in this example that the inner surface of the fitting slot 5502 is formed with a plurality of plane positioning ribs 55021. The arrangement of the plane positioning ribs 55021 helps to clamp the cantilever beam, thereby improving the stability of the assembly between the lower fitting slot and the cantilever beam. A reinforcing rib 55022 is formed between the lower end of the fitting slot 5502 and the weighing sensor bracket 55. The arrangement of the reinforcing rib 55022 helps to improve the connection strength between the fitting slot 5502 and the weighing sensor bracket 55.

Furthermore, in this example, it can also be contemplated that the suction disc foot 58 has a stepped shape, including a rubber foot part 5801 and a suction disc part 5802 that are connected from top to bottom in this order. The suction disc part is recessed to form a truncated cone-shaped suction slot 5803. When the stirring-type cooking machine is placed on the top of a table, the air in the suction disc foot 58 is pressed out, causing the air pressure inside the suction disc foot 58 to be lower than the air pressure outside the suction disc foot, and the suction disc foot 58 is less likely to be pulled up, reducing the vibration and displacement of the stirring-type cooking machine, and increasing the stability of the whole machine. On the other hand, the suction disc foot 58 has a certain height and certain elasticity, which can not only help to absorb vibration and fix the cooking machine, but also help to dissipate the heat of the components above the mainframe base.

That is, when the kitchen appliance is placed on the table top, the air in the suction slot 5803 at the lower part of the suction disc part 5802 is pressed out, causing the air pressure in the suction slot 5803 to be lower than the air pressure outside the suction disc feet, and the suction disc foot 58 is less likely to be pulled up. Therefore, it is difficult for the longitudinal vibration and displacement generated during cooking/kneading to pull up the suction disc foot 58, which can reduce the vibration and displacement of the kitchen appliance and increase the stability of the machine.

Furthermore, in this example, it can also be contemplated that the rubber foot part 5801 has a cylindrical structure, the number of the rubber foot parts 5801 is at least one, and the diameters of the rubber foot parts are increased gradually from top to bottom.

Furthermore, in this example, it can also be contemplated that the suction disc foot bracket 56 has a cylindrical structure, and a second hollow positioning post 5601 that can be inserted into the first hollow positioning post 5503 is formed protruding upward from the upper part of the suction disc foot bracket 56. A positioning ring 5602 wrapped around the outside of the reset ring 57 is formed upward on the upper edge of the second hollow positioning post 5601, and a positioning slot for the suction disc foot 58 (i.e., the rubber foot part 5801) to be fitted and inserted is formed as a recess in the lower part of the second hollow positioning post 5601. The reset ring 57 is sleeved outside the first hollow positioning post 5503, the suction disc foot bracket 56 is inserted below the weighing sensor bracket 55, the second hollow positioning post 5601 is inserted into the first hollow positioning post 5503. Then, the reset ring 57 is accommodated in the space enclosed by the weighing sensor bracket 55, the positioning ring 5602, and the suction disc foot bracket, and the rubber foot part 5801 is inserted into the positioning slot.

Furthermore, in this example, it can also be contemplated that the weighing foot assembly 5 further includes a positioning screw 61, and the positioning screw 61 passes through the suction disc foot 58, the suction disc foot bracket 56, the second hollow positioning post 5601 and the first hollow positioning post 5503 sequentially from bottom to top and is connected to an anti-dropping nut 62 in the weighing avoidance slot 5501. The weighing sensor bracket 55, the suction disc foot bracket 56, the reset ring 57, and the suction disc foot 58 can be fixed as a whole by the positioning screw 61 and the anti-drop nut 62.

Furthermore, in this example, it can also be contemplated that there are also stainless steel washers 65 provided respectively between the anti-drop nut 62 and the weighing sensor bracket 55, between the reset ring 57 and the suction disc foot bracket 56, and between the positioning screw 61 and the suction disc foot 58.

Furthermore, in this example, it can also be contemplated that, as shown in Fig. 4, the suction disc foot bracket 56 is suspended and inserted through the via hole 59 for the suction disc foot, and a movement gap D2 between the suction disc foot bracket 56 and the via hole 59 for the suction disc foot has a size larger than that of a movement gap D1 between the second hollow positioning post 5601 of the suction disc foot bracket and the first hollow positioning post 5503 of the weighing sensor bracket (the gap where the weighing foot assembly moves). D2 being larger than D1 can ensure that the weighing foot assembly will not touch the via hole 59 for the suction disc foot when moving around. Even if the cooking machine is fully loaded with food on a slanted place of the tabletop, the weighing foot assembly won't touch the via hole for a suction disc foot, which can ensure the accuracy of weighing. In addition, the gap between the weighing foot assembly and the via hole 59 for the suction disc foot can also be used as a drainage gap, so that the water on the base can be drained through the drainage gap, preventing the liquid in the base from being drained, preventing the electrical components from entering water, and improving safety.

### Example 10

Referring to Fig. 53, a wear-resistant insert structure 70, which is integrally formed in the blade assembly fixing lock 30, includes a wear-resistant insert body 701 embedded in the blade assembly fixing lock 30 and a wear-resistant ear 702 for protecting the fixing lock screw buckle 38 on the blade assembly fixing lock 30, and the wear-resistant ear 702 matches the shape of the locking surface of the fixing lock screw buckle 38.

### Example 11

A shock-proof and displacement-proof structure for a weighing foot is provided in a weighing foot assembly. The weighing foot assembly includes a cantilever beam assembly, an upper steel plate and a weighing sensor bracket respectively arranged on and below the cantilever beam assembly, a suction disc foot bracket inserted below the weighing sensor bracket. The shock-proof and displacement-proof structure includes: a reset ring provided between the weighing sensor bracket and the suction disc foot bracket and for reducing lateral vibration and displacement on the circumference, and a suction disc foot provided at a lower end of the suction disc foot bracket and for reducing longitudinal vibration and lateral displacement.

### Example 12

A blade assembly fixing structure includes:
a blade assembly, wherein the blade assembly comprises a blade holder assembled on a bottom wall of the container cup and at least two groups of blade sets arranged staggered with each other up and down;
a blade assembly fixing lock, wherein the blade assembly fixing lock is movably sleeved on an outer side of the blade holder and locked with the blade holder through a screw buckle assembly, and at least two spanner bars are evenly formed on an outer wall along a circumferential direction.

In summary, the present disclosure provides a stirring-type cooking appliance including a container cup fixing structure, a cover opening protection structure, a blade assembly fixing structure and a weighing foot assembly, which can ensure the accuracy of weighing, preventing the whole machine from overflowing and which is safe, stable, and has high controllability.

The present disclosure has been described in detail through the above examples, however, the disclosure is only preferred examples of the present disclosure.

## Claims

1. A stirring-type cooking appliance, comprising a mainframe housing (1, 2), a motor (3) assembled in the mainframe housing (1, 2), and a container cup assembly (4) detachably assembled on the mainframe housing (1, 2), the mainframe housing (1, 2) comprising an integrally installed mainframe upper cover (1) and a mainframe base (2), each corner end of the mainframe base (2) being respectively provided with an installation position which is a specific position for positioning a weighing foot assembly (5),
wherein the container cup assembly (4) is locked/unlocked with the mainframe housing (1, 2) through a container cup fixing structure (11, 12, 13, 14, 15, 16, 17), the container cup assembly (4) and the motor (3) are interlocked with each other through a cover opening protection structure (21, 22, 23, 24, 25, 26), a blade assembly (8) in the container cup assembly (4) and the motor (3) are interlocked with each other through a blade assembly fixing structure (8, 30, 66, 68), and the weighing foot assembly (5) is mounted in a suspended manner at the installation position;
wherein the mainframe upper cover (1) comprises an upper cover side wall (101) in a cylindrical surface form, an upper cover bottom wall (102) closing at the lower part of the upper cover side wall (102), and a circle of upper cover outer edge (103) formed on the upper edge of the upper cover side wall (102) and extending outwards;
**characterized in that** the container cup fixing structure (11, 12, 13, 14, 15, 16, 17) comprises:
locking buckle members (11), wherein a number of the locking buckle members (11) is at least three, and the locking buckle members (11) are evenly distributed on a periphery of the upper cover side wall (102), the locking buckle member (11) comprises a locking buckle bracket (1101) and a locking buckle that can be extended/retracted on the locking buckle bracket (1101);
locking buckle openings (12), wherein the locking buckle opening (12) are of the same number as the number of the locking buckle members (11), and the locking buckle openings (12) are evenly provided on the upper cover side wall (102) and correspond to the locking buckles one to one, for the locking buckles to extend/retract;
a rotating ring (13), wherein the rotating ring (13) is rotatably assembled on the periphery of the upper cover side wall (102), and is provided with a release lever (14) for turning the rotating ring (13) to rotate, and rotating ring bosses (15) for driving the locking buckles to retract;
fixing holes (16), wherein the fixing holes (16) are of the same number as the number of the locking buckle members (11), and the fixing holes (16) are evenly provided on a side wall of the cup holder (7) and for the locking buckles to be inserted in the fixing holes (16) one to one; and
a tension spring (17), wherein the tension spring (17) has one end fixed on the rotating ring (13) and the other end fixed on the upper cover outer edge (103).

2. The stirring-type cooking appliance according to claim 1, wherein the container cup assembly (4) comprises a container cup (6) and a cup holder (7) which are connected as one body, a blade assembly (8) assembled inside the container cup (6), a container cover (9) buckled on the container cup (6), and a handle shell (10) fixed on one side of the container cup (6).

3. The stirring-type cooking appliance according to claim 2, wherein the cover opening protection structure (21, 22, 23, 24, 25, 26) comprises:
a handle safety link (21), wherein the handle safety link (21) is configured to move up and down in a hollow working slot of a handle base (1001) in the handle shell (10), and comprises a link body (2101), a driving inclined surface (2102) and a driving rod (2103) respectively provided on an upper part and a lower part of the link body;
a second return spring (22), wherein the second return spring (22) is sleeved on the driving rod (2103) and located between the link body (2101) and the handle base (1001);
a hook-type buckle (23), wherein the hook-type buckle (23) is fixedly connected to a lower end of the container cover (9), and has a buckle inclined surface formed at a lower part of the hook-type buckle (23) for driving the handle safety link (21) to move up and down; and
a micro switch (24), wherein the micro switch (24) is assembled in the mainframe housing (1, 2), and the driving rod (2103) drives an elastic leaf of the micro switch (24) to be pressed down/bounced up through a mainframe safety link (25).

4. The stirring-type cooking appliance according to claim 3, wherein a micro switch (24) bracket is also installed in the mainframe housing (1, 2), and the mainframe safety link (25) and the micro switch (24) are respectively disposed in the micro switch bracket (26).

5. The stirring-type cooking appliance according to claim 1, wherein the blade assembly fixing structure (8, 30, 66, 68) comprises:
a blade assembly (8), wherein the blade assembly (8) comprises a blade holder (801) assembled on a bottom wall of the container cup and at least two groups of blade sets (802) arranged staggered with each other up and down;
a blade assembly fixing lock (30), wherein the blade assembly fixing lock (30) is movably sleeved on an outer side of the blade holder (801) and locked with the blade holder through a screw buckle assembly, and at least two spanner bars (3001) are evenly formed on an outer wall along a circumferential direction.

6. The stirring-type cooking appliance according to claim 5, wherein the screw buckle assembly comprises a fixing lock screw buckle (38) and a to-be-locked member, and the fixing lock screw buckle (38) is used to lock the to-be-locked member.

7. The stirring-type cooking appliance according to claim 6, wherein there are at least two fixing lock screw buckles (38) formed on an inner wall of the blade assembly fixing lock (30) and evenly formed on along a circumference direction of the inner wall of the blade assembly fixing lock (30), a locking surface of the fixing lock screw buckle (38) is L-shaped, and the locking surface has:
a guiding inclined surface (3801), which is an inclined surface inclined to one side;
a locking flat surface (3820), which is transitionally connected with the guiding inclined surface and extends a certain length along the circumference of the blade assembly fixing lock (30); and
a blocking inclined surface (3803), which is a vertical surface inclined to one side, is transitionally connected to the locking flat surface (3820).

8. The stirring-type cooking appliance according to claim 6, wherein the blade assembly fixing lock (30) comprises:
a wear-resistant insert structure (70) integrally formed in the blade assembly fixing lock (30), and comprises a wear-resistant insert body (701) embedded in the blade assembly fixing lock and a wear-resistant ear (702) used to protect the fixing lock screw buckle (38) on the blade assembly fixing lock, the wear-resistant ear (702) matches a shape of the locking surface of the fixing lock screw buckle (38).

9. The stirring-type cooking appliance according to claim 7, wherein the spanner bar (3001) comprises a spanner bar body (30011) extending outward in a radial direction of the blade assembly fixing lock (30), and a wrench slot (30012) opened at a lower end of the spanner bar body.

10. The stirring-type cooking appliance according to claim 1, wherein an overflow structure is further provided in the mainframe upper cover (1), and the overflow structure comprises:
a mainframe-upper-cover drainage structure comprising at least one side drainage hole (46) opened at an edge of the upper cover bottom wall (102), and a first water receiving part for transferring liquid in the side drainage hole (46);
an interference drainage structure comprising a water receiving tray (47) for receiving liquid overflowing from a gap between the lower clutch (28) in the blade assembly fixing structure (8, 30, 66, 68) and the upper cover bottom wall (102), and a second water receiving component for transferring liquid in the water receiving tray (47).

11. The stirring-type cooking appliance according to claim 10 wherein the upper cover bottom wall (102) is provided with a motor hole for partially inserting the lower clutch (28), and at least one circle of water retaining ring (48) is formed downwardly on an outer side of the lower clutch (28), a circle of water retaining wall (49) extends upward from an edge of the motor hole, and an upper end of the water retaining wall (49) extends into the water retaining ring (48).

12. The stirring-type cooking appliance according to claim 10, wherein the first water receiving part comprises a base drainage pipe (50) vertically installed on the mainframe base (2), and a water receiving pipe (51) inserted on an upper end of the base drainage pipe (50).

13. The stirring-type cooking appliance according to claim 10, wherein a second water receiving part comprises a base drainage pipe (50) a vertically installed on the mainframe base (2), and a drainage gap (52) located between the weighing foot assembly (5) and a via hole (59) for a suction disc foot and in the shape of a circular column.

## Patentansprüche

1. Rührkochgerät aufweisend ein Hauptrahmengehäuse (1, 2), einen Motor (3), der in dem Hauptrahmengehäuse (1, 2) montiert ist, und eine Behältertopfanordnung (4), die abnehmbar an dem Hauptrahmengehäuse (1, 2) montiert ist, wobei das Hauptrahmengehäuse (1, 2) eine einstückig installierte obere Hauptrahmenabdeckung (1) und eine Hauptrahmenbasis (2) aufweist, wobei jedes Eckende der Hauptrahmenbasis (2) jeweils mit einer Installationsposition versehen ist, die eine spezifische Position zum Positionieren einer Wiegefußanordnung (5) ist,
wobei die Behältertopfanordnung (4) mit dem Hauptrahmengehäuse (1, 2) durch eine Behältertopfbefestigungsstruktur (11, 12, 13, 14, 15, 16, 17) verriegelt/entriegelt ist, die Behältertopfanordnung (4) und der Motor (3) durch eine Abdeckungsöffnungsschutzstruktur (21, 22, 23, 24, 25, 26) miteinander verriegelt sind, eine Schaufelanordnung (8) in der Behältertopfanordnung (4) und der Motor (3) durch eine Schaufelanordnung-Befestigungsstruktur (8, 30, 66, 68) miteinander verriegelt sind und die Wiegefußanordnung (5) an der Installationsposition hängend montiert ist;
wobei die obere Hauptrahmenabdeckung (1) eine obere Abdeckungsseitenwand (101) in einer zylindrischen Oberflächenform, eine obere Abdeckungsbodenwand (102), die den unteren Teil der oberen Abdeckungsseitenwand (102) abschließt, und einen kreisförmigen äußeren Abdeckungsrand (103) aufweist, der an dem oberen Rand der oberen Abdeckungsseitenwand (102) ausgebildet ist und sich nach außen erstreckt;
**dadurch gekennzeichnet, dass** die Behältertopfbefestigungsstruktur (11, 12, 13, 14, 15, 16, 17) Folgendes aufweist:
Verriegelungsschnallelemente (11), wobei eine Anzahl der Verriegelungsschnallelemente (11) mindestens drei beträgt und die Verriegelungsschnallelemente (11) gleichmäßig auf einem Umfang der oberen Abdeckungsseitenwand (102) verteilt sind, wobei das Verriegelungsschnallelement (11) eine Verriegelungsschnallenhalterung (1101) und eine Verriegelungsschnalle aufweist, die auf der Verriegelungsschnallenhalterung (1101) ausgezogen/eingezogen werden kann;
Verriegelungsschnallenöffnungen (12), wobei die Verriegelungsschnallenöffnungen (12) die gleiche Anzahl wie die Anzahl der Verriegelungsschnallelemente (11) aufweisen und die Verriegelungsschnallenöffnungen (12) gleichmäßig an der oberen Abdeckungsseitenwand (102) vorgesehen sind und den Verriegelungsschnallen eins zu eins entsprechen, damit die Verriegelungsschnallen ausgezogen/eingeklappt werden können;
einen Drehring (13), wobei der Drehring (13) drehbar am Umfang der oberen Abdeckungsseitenwand (102) angebracht ist und mit einem Freigabehebel (14) zum Drehen des Drehrings (13), um sich zu drehen, und mit Drehringansätzen (15) zum Antreiben der Verriegelungsschnallen, um sich zurückzuziehen, versehen ist;
Befestigungslöchern (16), wobei die Anzahl der Befestigungslöcher (16) gleich der Anzahl der Verriegelungsschnallelemente (11) ist und die Befestigungslöcher (16) gleichmäßig an einer Seitenwand des Topfhalters (7) vorgesehen sind, so dass die Verriegelungsschnallen eins zu eins in die Befestigungslöcher (16) eingesetzt werden können; und
eine Spannfeder (17), wobei die Spannfeder (17) mit einem Ende an dem Drehring (13) und mit dem anderen Ende an dem äußeren Abdeckungsrand (103) befestigt ist.

2. Rührkochgerät nach Anspruch 1, wobei die Behältertopfanordnung (4) einen Behältertopf (6) und einen Topfhalter (7) aufweist, die als ein Körper verbunden sind, eine Schaufelanordnung (8), die innerhalb des Behältertopfes (6) montiert ist, eine Behälterabdeckung (9), die auf den Behältertopf (6) geschnallt ist, und eine Griffschale (10), die an einer Seite des Behältertopfes (6) befestigt ist.

3. Rührkochgerät nach Anspruch 2, wobei die Abdeckungsöffnungsschutzstruktur (21, 22, 23, 24, 25, 26) aufweist:
ein Griffsicherheitsglied (21), wobei das Griffsicherheitsglied (21) so konfiguriert ist, dass es sich in einem hohlen Arbeitsschlitz einer Griffbasis (1001) in der Griffschale (10) auf und ab bewegt, und einen Verbindungskörper (2101), eine schräge Antriebsfläche (2102) und eine Antriebsstange (2103) aufweist, die jeweils an einem oberen Teil und einem unteren Teil des Verbindungskörpers vorgesehen sind;
eine zweite Rückholfeder (22), wobei die zweite Rückholfeder (22) auf der Antriebsstange (2103) ummantelt ist und sich zwischen dem Verbindungskörper (2101) und der Griffbasis (1001) befindet;
eine hakenartige Schnalle (23), wobei die hakenartige Schnalle (23) fest mit einem unteren Ende der Behälterabdeckung (9) verbunden ist und eine an einem unteren Teil der hakenartigen Schnalle (23) ausgebildete Schnallenschrägfläche aufweist, um das Griffsicherheitsglied (21) nach oben und unten zu bewegen; und
einen Mikroschalter (24), wobei der Mikroschalter (24) in dem Hauptrahmengehäuse (1, 2) montiert ist und die Antriebsstange (2103) ein elastisches Blatt des Mikroschalters (24) antreibt, um durch eine Hauptrahmen-Sicherheitsverbindung (25) nach unten gedrückt/aufgesprungen zu werden.

4. Rührkochgerät nach Anspruch 3, **dadurch gekennzeichnet, dass** im Hauptrahmengehäuse (1, 2) auch ein Bügel für einen Mikroschalter (24) installiert ist, und dass die Sicherheitsverbindung des Hauptrahmens (25) und der Mikroschalter (24) jeweils im Bügel für den Mikroschalter (26) angeordnet sind.

5. Rührkochgerät nach Anspruch 1, wobei die Schaufelanordnung (8, 30, 66, 68) folgendes aufweist:
eine Schaufelanordnung (8), wobei die Schaufelanordnung (8) einen Schaufelhalter (801) aufweist, der an einer Bodenwand des Behältertopfes montiert ist, und mindestens zwei Gruppen von Schaufelsätzen (802), die oben und unten zueinander versetzt angeordnet sind;
eine Schaufelanordnung-Befestigungsverriegelung (30), wobei die Schaufelanordnung-Befestigungsverriegelung (30) beweglich an einer Außenseite des Schaufelhalters (801) angebracht und mit dem Schaufelhalter durch eine Schraubschnallenanordnung verriegelt ist, und mindestens zwei Spannstangen (3001) gleichmäßig an einer Außenwand entlang einer Umfangsrichtung ausgebildet sind.

6. Rührkochgerät nach Anspruch 5, **dadurch gekennzeichnet, dass** die Schraubschnalle eine Fixierschnalle (38) und ein zu verriegelndes Element aufweist, und dass die Fixierschnalle (38) zum Verriegeln des zu verriegelnden Elements dient.

7. Rührkochgerät nach Anspruch 6, wobei mindestens zwei Fixierschnalle (38) an einer Innenwand der Schaufelanordnung-Befestigungsverriegelung (30) ausgebildet sind und gleichmäßig entlang einer Umfangsrichtung der Innenwand der Schaufelanordnung-Befestigungsverriegelung (30) ausgebildet sind, eine Verriegelungsfläche der Fixierschnalle (38) L-förmig ist und die Verriegelungsfläche aufweist:
eine geneigte Führungsfläche (3801), bei der es sich um eine nach einer Seite geneigte Fläche handelt;
eine flache Verriegelungsfläche (3820), die übergangsweise mit der geneigten Führungsfläche verbunden ist und sich über eine bestimmte Länge entlang des Umfangs der Schaufelanordnung-Befestigungsverriegelung (30) erstreckt; und
eine geneigte Blockierfläche (3803), bei der es sich um eine vertikale, zu einer Seite geneigte Fläche handelt, die übergangsweise mit der flachen Verriegelungsfläche (3820) verbunden ist.

8. Rührkochgerät nach Anspruch 6, wobei die Schaufelanordnung-Befestigungsverriegelung (30) aufweist:
eine verschleißfeste Einsatzstruktur (70), die integral in der Schaufelanordnung-Befestigungsverriegelung (30) ausgebildet ist, und einen verschleißfesten Einsatzkörper (701), der in die Schaufelanordnung-Befestigungsverriegelung eingebettet ist, und eine verschleißfeste Öse (702) aufweist, die zum Schutz der Fixierschnalle (38) an der Schaufelanordnung-Befestigungsverriegelung dient, wobei die verschleißfeste Öse (702) einer Form der Verriegelungsfläche der Fixierschnalle (38) entspricht.

9. Rührkochgerät nach Anspruch 7, wobei die Spannstange (3001) einen Spannstangenkörper (30011), der sich in einer radialen Richtung der Schaufelanordnung-Befestigungsverriegelung (30) nach außen erstreckt, und einen an einem unteren Ende des Spannstangenkörpers geöffneten Schraubenschlüsseleinschub (30012) aufweist.

10. Rührkochgerät nach Anspruch 1, wobei eine Überlaufstruktur ferner in der oberen Hauptrahmenabdeckung (1) vorgesehen ist und die Überlaufstruktur aufweist:
eine obere Hauptrahmenabdeckungs-Ablaufstruktur, die mindestens ein seitliches Ablaufloch (46), das an einem Rand der oberen Abdeckungsbodenwand (102) geöffnet ist, und einen ersten Wasseraufnahmeteil zum Übertragen von Flüssigkeit in dem seitlichen Ablaufloch (46) aufweist;
eine Interferenz-Ablaufstruktur, die eine Wasserauffangschale (47) zum Auffangen von Flüssigkeit, die aus einem Spalt zwischen der unteren Kupplung (28) in der Schaufelanordnung-Befestigungsstruktur (8, 30, 66, 68) und der oberen Abdeckungsbodenwand (102) überläuft, und ein zweites Wasserauffangteil zum Weiterleiten von Flüssigkeit in der Wasserauffangschale (47) aufweist.

11. Rührkochgerät nach Anspruch 10, wobei die obere Abdeckungsbodenwand (102) mit einem Motorloch zum teilweisen Einsetzen der unteren Kupplung (28) versehen ist und mindestens ein kreisförmiger Wasserrückhaltering (48) nach unten an einer Außenseite der unteren Kupplung (28) ausgebildet ist, ein Kreis einer Wasserrückhaltewand (49) sich von einem Rand des Motorlochs nach oben erstreckt und ein oberes Ende der Wasserrückhaltewand (49) sich in den Wasserrückhaltering (48) hinein erstreckt.

12. Rührkochgerät nach Anspruch 10, wobei der erste Wasseraufnahmeteil ein senkrecht auf der Hauptrahmenbasis (2) installiertes Bodenabflussrohr (50) und ein an einem oberen Ende des Bodenabflussrohrs (50) eingesetztes Wasseraufnahmerohr (51) aufweist.

13. Rührkochgerät nach Anspruch 10, wobei ein zweiter Wasseraufnahmeteil ein vertikal auf der Hauptrahmenbasis (2) installiertes Bodenabflussrohr (50) und einen zwischen der Wiegefußanordnung (5) und einem Durchgangsloch (59) für einen Saugscheibenfuß angeordneten, kreisförmigen Abflussspalt (52) aufweist.

## Revendications

1. Appareil de cuisson du type à agitation, comprenant un boîtier (1, 2) de châssis principal, un moteur (3) assemblé dans le boîtier (1, 2) de châssis principal, et un ensemble (4) coupelle de récipient assemblé de manière détachable sur le boîtier (1, 2) de châssis principal, le boîtier (1, 2) de châssis principal comprenant un couvercle (1) supérieur de châssis principal installé d'un seul tenant et une base (2) de châssis principal, chaque extrémité d'angle de la base (2) de châssis principal étant respectivement dotée d'une position d'installation qui est une position spécifique pour le positionnement d'un ensemble (5) pied de pesée,
dans lequel l'ensemble (4) coupelle de récipient est verrouillé/déverrouillé avec le boîtier (1, 2) de châssis principal par le biais d'une structure (11, 12, 13, 14, 15, 16, 17) de fixation de coupelle de récipient, l'ensemble (4) coupelle de récipient et le moteur (3) sont verrouillés l'un avec l'autre par une structure (21, 22, 23, 24, 25, 26) de protection d'ouverture de couvercle, un ensemble (8) lame dans l'ensemble (4) coupelle de récipient et le moteur (3) sont verrouillés l'un avec l'autre par une structure (8, 30, 66, 68) de fixation d'ensemble lame et l'ensemble (5) pied de pesée est suspendu à la position de montage ;
dans lequel le couvercle (1) supérieur de châssis principal comprend une paroi (101) latérale de couvercle supérieur sous une forme de surface cylindrique, une paroi (102) inférieure de capot supérieur se fermant au niveau de la partie inférieure de la paroi (102) latérale de couvercle supérieur, et un cercle (103) de bord extérieur de couvercle supérieur formé sur le bord supérieur de la paroi (102) latérale de couvercle supérieur et s'étendant vers l'extérieur ;
**caractérisé en ce que** la structure (11, 12, 13, 14, 15, 16, 17) de fixation de coupelle de récipient comprend :
des éléments (11) de boucle de verrouillage, dans lequel un nombre d'éléments (11) de boucle de verrouillage est d'au moins trois, et les éléments (11) de boucle de verrouillage sont répartis uniformément sur une périphérie de la paroi (102) latérale de couvercle supérieur, l'élément (11) de boucle de verrouillage comprend un support (1101) de boucle de verrouillage et une boucle de verrouillage qui peut être étendue/rétractée sur le support (1101) de boucle de verrouillage ;
des ouvertures (12) de boucle de verrouillage, dans lequel le nombre d'ouvertures (12) de boucle de verrouillage est identique au nombre d'éléments (11) de boucle de verrouillage, et les ouvertures (12) de boucle de verrouillage sont ménagées uniformément sur la paroi (102) latérale de couvercle supérieur et correspondent aux boucles de verrouillage une par une, pour que les boucles de verrouillage s'étendent/se rétractent ;
une bague (13) rotative, dans lequel la bague (13) rotative est assemblée en rotation sur la périphérie de la paroi (102) latérale de couvercle supérieur, et est dotée d'un levier (14) de déverrouillage pour faire tourner la bague (13) rotative, et de bossages (15) de bague rotative pour entraîner les boucles de verrouillage afin qu'elles se rétractent ;
des trous (16) de fixation, dans lequel le nombre de trous (16) de fixation est identique au nombre des éléments (11) de boucle de verrouillage, et les trous (16) de fixation sont prévus uniformément sur une paroi latérale du porte-coupelle (7) et pour que les boucles de verrouillage soient insérées dans les trous (16) de fixation une par une ; et
un ressort (17) de tension, dans lequel le ressort (17) de tension présente une extrémité fixée sur la bague (13) rotative et l'autre extrémité fixée sur le bord (103) extérieur de couvercle supérieur.

2. Appareil de cuisson du type à agitation selon la revendication 1, dans lequel l'ensemble (4) coupelle de récipient comprend une coupelle (6) de récipient et un porte-coupelle (7) qui sont reliés comme un seul corps, un ensemble (8) lame assemblé à l'intérieur de la coupelle (6) de récipient, un couvercle (9) de récipient serré sur la coupelle (6) de récipient et une coque (10) de poignée fixée sur un côté de la coupelle (6) de récipient.

3. Appareil de cuisson du type à agitation selon la revendication 2, dans lequel la structure (21, 22, 23, 24, 25, 26) de protection d'ouverture de couvercle comprend :
un maillon (21) de sécurité de poignée, dans lequel le maillon (21) de sécurité de poignée est configuré pour se déplacer vers le haut et vers le bas dans une fente de fonctionnement creuse d'une base (1001) de poignée dans la coque (10) de poignée, et comprend un corps (2101) de maillon, une surface (2102) inclinée d'entraînement et une tige (2103) d'entraînement prévues respectivement sur une partie supérieure et une partie inférieure du corps de maillon ;
un deuxième ressort (22) de rappel, dans lequel le deuxième ressort (22) de rappel est manchonné sur la tige (2103) d'entraînement et situé entre le corps (2101) de maillon et la base (1001) de poignée ;
une boucle (23) du type crochet, dans lequel la boucle (23) du type crochet est reliée de manière fixe à une extrémité inférieure du couvercle (9) de récipient et présente une surface inclinée de boucle formée au niveau d'une partie inférieure de la boucle (23) du type crochet pour entraîner le maillon (21) de sécurité de poignée afin qu'il se déplace vers le haut et vers le bas ; et
un microrupteur (24), dans lequel le microrupteur (24) est assemblé dans le boîtier (1, 2) de châssis principal, et la tige (2103) d'entraînement entraîne une feuille élastique du microrupteur (24) destinée à être abaissée/à rebondir par le biais d'un maillon (25) de sécurité de châssis principal.

4. Appareil de cuisson du type à agitation selon la revendication 3, dans lequel un support de microrupteur (24) est également installé dans le boîtier (1, 2) de châssis principal, et le maillon (25) de sécurité de châssis principal et le microrupteur (24) sont respectivement disposés dans le support (26) de microrupteur.

5. Appareil de cuisson du type à agitation selon la revendication 1, dans lequel la structure (8, 30, 66, 68) de fixation d'ensemble lame comprend :
un ensemble (8) lame, dans lequel l'ensemble (8) lame comprend un porte-lame (801) assemblé sur une paroi inférieure de la coupelle de récipient et au moins deux groupes d'ensembles (802) lames agencés décalés l'un par rapport à l'autre vers le haut et vers le bas ;
un verrou (30) de fixation d'ensemble lame, dans lequel le verrou (30) de fixation d'ensemble lame est manchonné de manière mobile sur un côté extérieur du porte-lame (801) et verrouillé avec le porte-lame par le biais d'un ensemble boucle à vis, et au moins deux barres (3001) de clé sont formées uniformément sur une paroi extérieure le long d'une direction circonférentielle.

6. Appareil de cuisson du type à agitation selon la revendication 5, dans lequel l'ensemble boucle à vis comprend une boucle (38) à vis de verrouillage de fixation et un élément à verrouiller, et la boucle (38) à vis de verrouillage de fixation est utilisée pour verrouiller l'élément à verrouiller.

7. Appareil de cuisson du type à agitation selon la revendication 6, dans lequel il y a au moins deux boucles (38) à vis de verrouillage de fixation formées sur une paroi interne du verrou (30) de fixation d'ensemble lame et uniformément formées le long d'une direction circonférentielle de la paroi interne du verrou (30) de fixation d'ensemble lame, une surface de verrouillage de la boucle (38) à vis de verrouillage de fixation est en forme de L, et la surface de verrouillage présente :
une surface (3801) inclinée de guidage, qui est une surface inclinée qui est inclinée d'un côté ;
une surface (3820) plane de verrouillage, qui est reliée de manière transitoire à la surface inclinée de guidage et s'étend sur une certaine longueur le long de la circonférence de la lame un verrou (30) de fixation d'ensemble ; et
une surface (3803) inclinée de blocage, qui est une surface verticale inclinée d'un côté, est reliée de manière transitoire à la surface (3820) plane de verrouillage.

8. Appareil de cuisson du type à agitation selon la revendication 6, dans lequel le verrou (30) de fixation d'ensemble lame comprend :
une structure (70) d'insert résistante à l'usure formée d'un seul tenant dans le verrou (30) de fixation d'ensemble lame, et comprenant un corps (701) d'insert résistant à l'usure incorporé dans le verrou de fixation d'ensemble lame et une oreille (702) résistante à l'usure utilisée pour protéger la boucle (38) à vis de verrouillage de fixation sur le verrou de fixation d'ensemble lame, l'oreille (702) résistante à l'usure correspond à une forme de la surface de verrouillage de la boucle (38) à vis de verrouillage de fixation.

9. Appareil de cuisson du type à agitation selon la revendication 7, dans lequel la barre (3001) de clé comprend un corps (30011) de barre de clé s'étendant vers l'extérieur dans une direction radiale du verrou (30) de fixation d'ensemble lame, et une fente (30012) de clé ouverte à une extrémité inférieure du corps de barre de clé.

10. Appareil de cuisson du type à agitation selon la revendication 1, dans lequel une structure de débordement est en outre prévue dans le couvercle (1) supérieur de châssis principal, et la structure de débordement comprend :
une structure d'évacuation de couvercle supérieur de châssis principal comprenant au moins un trou (46) d'évacuation latéral ouvert au niveau d'un bord de la paroi (102) inférieure de couvercle supérieur, et une première partie de réception d'eau pour transférer du liquide dans le trou (46) d'évacuation latéral ;
une structure d'évacuation d'interférence comprenant un plateau (47) de réception d'eau pour recevoir un liquide débordant d'un espace entre l'embrayage (28) inférieur dans la structure (8, 30, 66, 68) de fixation d'ensemble lame et la paroi (102) inférieure de couvercle supérieur, et un deuxième composant de réception d'eau pour transférer du liquide dans le plateau (47) de réception d'eau.

11. Appareil de cuisson du type à agitation selon la revendication 10, dans lequel la paroi (102) inférieure de couvercle supérieur est dotée d'un trou de moteur pour insérer partiellement l'embrayage (28) inférieur, et au moins un cercle de bague (48) de retenue d'eau est formé vers le bas sur un côté extérieur de l'embrayage (28) inférieur, un cercle de paroi (49) de retenue d'eau s'étend vers le haut à partir d'un bord du trou de moteur, et une extrémité supérieure de la paroi (49) de retenue d'eau s'étend dans la bague (48) de retenue d'eau.

12. Appareil de cuisson du type à agitation selon la revendication 10, dans lequel la première partie de réception d'eau comprend un tuyau (50) d'évacuation de base installé verticalement sur la base (2) de châssis principal, et un tuyau (51) de réception d'eau inséré sur une extrémité supérieure du tuyau (50) d'évacuation de base.

13. Appareil de cuisson du type à agitation selon la revendication 10, dans lequel une deuxième partie de réception d'eau comprend un tuyau (50) d'évacuation de base installé verticalement sur la base (2) de châssis principal, et un espace (52) d'évacuation situé entre l'ensemble (5) pied de pesée et un trou (59) d'interconnexion pour un pied de disque d'aspiration et en forme de colonne circulaire.
